(19) Europäisches Patentamt
European Patent Office
Office européen des brevets

(11) **EP 4 339 846 A1**

(12) **EUROPEAN PATENT APPLICATION**
published in accordance with Art. 153(4) EPC

(43) Date of publication:
**20.03.2024  Bulletin 2024/12**

(21) Application number: **21941793.8**

(22) Date of filing: **10.05.2021**

(51) International Patent Classification (IPC):
***G06N 10/00*** *(2022.01)*

(52) Cooperative Patent Classification (CPC):
**G06N 10/00**

(86) International application number:
**PCT/JP2021/017690**

(87) International publication number:
**WO 2022/239059 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventor: **MIYAZAKI Ryoji
Tokyo 108-8001 (JP)**

(74) Representative: **Betten & Resch
Patent- und Rechtsanwälte PartGmbB
Maximiliansplatz 14
80333 München (DE)**

(54)    **ASSIGNMENT DEVICE, ASSIGNMENT METHOD, AND ASSIGNMENT RECORDING MEDIUM**

(57)    The allocation device 800 includes allocation means 801 for allocating binary variables of an Ising problem, which represents a cost function of an LHZ method, to nodes on a Pegasus graph according to the number of the binary variables and parameters for determining allocation of the binary variables, and output means 802 for outputting information indicating correspondence between the binary variable and the node, based on a result of the allocation of the binary variables to the nodes, wherein the allocation means 801 reflects a periodic structure that represents the relationship between pairs of the binary variables that are products in the cost function of the Ising problem to a periodic structure in the nodes and edges on the Pegasus graph, to allocate the binary variables to the nodes.

## FIG. 20

## Description

## Technical Field

This invention relates to an allocation device, an allocation method, and an allocation recording medium in quantum annealing.

## Background Art

One of methods for solving combinatorial optimization problems is quantum annealing. In quantum annealing, a cost function is defined. The state in which the value of the cost function is minimized is associated with the solution of the combinatorial optimization problem.

The cost function used here is a function of a variable called the Ising variable or Ising spin. Hereinafter, discussion is made using an Ising variable. The Ising variable is a variable that can only take values of 1 and -1. A cost function is represented by a large number of Ising variables. Ising variables are associated with variables in a combinatorial optimization problem. Any combination of values of the variables in the combinatorial optimization problem is represented by a combination of values of the Ising variables in the cost function. In particular, the smaller the value of the cost function, the better the combination in the combinatorial optimization problem. Therefore, the combination of Ising variables with the smallest value of the cost function among the combinations of Ising variables represents the optimal combination, i.e., the optimal solution, in that combinatorial optimization problem.

The combinatorial optimization problem expressed as a problem of minimizing the cost function of the Ising variables is called the Ising problem. In the following, discussion is made with solving the Ising problem in mind.

In quantum annealing, the combination of Ising variables that minimizes the defined cost function is searched for. The Ising variables of the cost function are represented by qubits. Although a qubit is just a variable in the quantum annealing method, the idea has its origin in a physical entity and can take on two states. The two states are made correspond to the Ising variables 1 and -1. The hardware in which this method is implemented is a quantum annealing machine.

The energy of an entire system consisting of multiple qubits can be defined. The method of finding the combination of states of a qubit whose energy is lowest, for example is quantum annealing. Quantum annealing can be used to solve the Ising problem. That is, in a quantum annealing machine, the two states of a qubit correspond to the Ising variables, and the energy of the entire qubit corresponds to the cost function of the Ising problem. In this way, obtaining a state with low energy of the entire qubit by quantum annealing corresponds to finding a combination of variables that reduces the value of the cost function of the Ising problem.

There is a method called the LHZ (Lechner-Hauke-Zoller) method (non-patent literature 1) for representing the cost function corresponding the Ising problem. Quantum annealing for the cost function handled by the LHZ method is called the quantum annealing of the LHZ method. It is necessary to make four qubits interact directly (four-body interactions) in the quantum annealing machine in order to perform the quantum annealing of the LHZ method on a quantum annealing .

The only quantum annealing machine currently in commercial use is the quantum annealing machine developed by D-wave Systems (registered trademark) inc. However, the hardware in D-wave can only handle the interaction of two qubits (two-body interactions). In other words, D-wave cannot directly handle four-body interactions and cannot directly handle the quantum annealing of the LHZ method.

However, there is a possibility that the quantum annealing of the LHZ method can be effectively realized in D-wave. The quantum annealing of the LHZ method can handled by converting the four-body interaction into multiple two-body interactions. Before and after this conversion, the states of the qubits coincide, which lowers the overall energy of the system. Therefore, D-wave can effectively realize quantum annealing for the purpose of searching for low-energy states.

In quantum annealing using not only the LHZ method but also D-wave , a product of Ising variables appearing in the cost function corresponds to the interaction between qubits. The interaction network of qubits in D-wave has a structure called a Chimera graph or a Pegasus graph which comprises nodes and edges. In this specification, Pegasus graphs are focused. To solve the Ising problem with quantum annealing by D-wave, variables of the cost function are appropriately allocated to nodes on the Pegasus graph. An example of a method for finding appropriate allocations is described in non-patent literature 1 and non-patent literature 2.

**Citation List**

**Patent Literature**

PTL 1: Japanese Patent No. 6656273

**Non Patent Literature**

NPL 1: K. Boothby, et al., "Technical report", [online], D-wave Systems inc., <URL: https://www.dwavesys.com/sites/default/files/14-1026A-C_Next-Generation-Topology-of-DW-Quantum-Processors.pdf> retrieved on March 23, 2021
NPL 2: J. Cai, et al., A practical heuristic for finding graph minors", arXiv: 1406.2741 (2014)
NPL 3: A. Rocchetto, et al., "Stabilizers as a design tool for new forms of the Lechner-Hauke-zoller annealer", Science Advances 2, e1601246 (2016)

**Summary of Invention**

**Technical Problem**

The method described in non-patent literature 1 is a method that can be applied to any Ising problem. However, the method described in non-patent literature 1 makes the same allocation for any Ising problem. As a result, there may be allocation that allows a smaller number of nodes to be used on the Pegasus graph for each Ising problem. The method described in non-patent literature 2 is a heuristic method. The method described in non-patent literature 2 can find allocation, but there is no guarantee that the same allocation is obtained each time it is performed. In particular, the method described in non-patent literature 2 has no guarantee that it can reduce the number of nodes used. In addition, the method described in non-patent literature 2 can result in a bias in the number of nodes to which each variable is allocated. Therefore, the two methods described above cannot find, or there is no guarantee that they can find, allocation that uses fewer nodes and has less bias when representing the Ising problem on a Pegasus graph and solving the Ising problem.

One of the purposes of the present invention is to solve such a problem and to provide an allocation device, an allocation method, and an allocation recording medium that can obtain obtain a correspondence between the variables of the Ising problem handled in the quantum annealing of the LHZ method and the nodes of the graph for solving the Ising problem, in which the number of nodes to which each variable is allocated is less biased and fewer nodes are used.

**Solution to Problem**

The allocation device according to the present invention includes allocation means for allocating binary variables of an Ising problem, which represents a cost function of an LHZ method, to nodes on a Pegasus graph according to the number of the binary variables and parameters for determining allocation of the binary variables, and output means for outputting information indicating correspondence between the binary variable and the node, based on a result of the allocation of the binary variables to the nodes, wherein the allocation means reflects a periodic structure that represents the relationship between pairs of the binary variables that are products in the cost function of the Ising problem to a periodic structure in the nodes and edges on the Pegasus graph, to allocate the binary variables to the nodes.

The allocation method according to the present invention includes allocating binary variables of an Ising problem, which represents a cost function of an LHZ method, to nodes on a Pegasus graph according to the number of the binary variables and parameters for determining allocation of the binary variables, outputting information indicating correspondence between the binary variable and the node, based on a result of the allocation of the binary variables to the nodes, and reflecting a periodic structure that represents the relationship between pairs of the binary variables that are products in the cost function of the Ising problem to a periodic structure in the nodes and edges on the Pegasus graph, to allocate the binary variables to the nodes.

The allocation recording medium according to the invention stores the allocation program causes a computer to execute a process of allocating binary variables of an Ising problem, which represents a cost function of an LHZ method, to nodes on a Pegasus graph according to the number of the binary variables and parameters for determining allocation of the binary variables, and a process of outputting information indicating correspondence between the binary variable and the node, based on a result of the allocation of the binary variables to the nodes, wherein in the process of allocating, the allocation program causes a computer to execute reflecting a periodic structure that represents the relationship between pairs of the binary variables that are products in the cost function of the Ising problem to a periodic structure in the nodes and edges on the Pegasus graph, to allocate the binary variables to the nodes.

**Advantageous Effects of Invention**

According to the present invention, when the quantum annealing of the LHZ method where the qubit coupling structure is a Pegasus graph is performed, it is possible to perform unbiased variable allocation with fewer qubits.

**Brief Description of Drawings**

[Fig. 1] It depicts an explanatory diagram showing four-body interaction of the cost function using an LHZ method.
[Fig. 2] It depicts an explanatory diagram showing an example of a Pegasus graph.
[Fig. 3] It depicts an explanatory diagram showing an example of a unit in a Pegasus graph.
[Fig. 4] It depicts an explanatory diagram showing a tile with u=0 in a Pegasus graph.
[Fig. 5] It depicts an explanatory diagram showing a tile with u = 1 in a Pegasus graph.
[Fig. 6] It depicts an explanatory diagram showing an example of a chain.
[Fig. 7] It depicts an explanatory diagram showing a structure of a product between variables in the cost function.
[Fig. 8] It depicts an explanatory diagram showing a part of a structure of a product between variables in the cost function.
[Fig. 9] It depicts an explanatory diagram showing a part of a structure of a product between variables in the cost function.
[Fig. 10] It depicts an explanatory diagram showing unit sequences in a Pegasus graph.
[Fig. 11] It depicts an explanatory diagram showing a part of a structure of a product between variables in the cost function and a plaquette sequence.
[Fig. 12] It depicts an explanatory diagram showing a chain.
[Fig. 13] It depicts an explanatory diagram showing an example of the computing system.
[Fig. 14] It depicts a block diagram showing an example of the configuration of the allocation device.
[Fig. 15] It depicts a block diagram showing an example of the hardware configuration of the allocation device.
[Fig. 16] It depicts an explanatory diagram showing a part of a structure of a product between variables in the cost function and a plaquette sequence.
[Fig. 17] It depicts a flowchart showing an operation of the allocation device.
[Fig. 18] It depicts a flowchart showing a calculation process of the Ising problem by the computing system.
[Fig. 19] It depicts an explanatory diagram showing an effect of the example embodiment.
[Fig. 20] It depicts a block diagram showing the main part of the allocation device.

**Description of Embodiments**

For ease of understanding the example embodiment, the Ising problem, the quantum annealing of the LHZ method, the Pegasus graph, representing the Ising problem on a Pegasus graph, and the quantum annealing machine associated with them are explained first.

The Ising problem is generally expressed as follows. First, variables that can take the values 1 and -1, i.e., binary variables for example N (N is a natural number) are prepared. Let them be denoted by $s_i$. The variables i can take values 1, 2, ... , N, and the variables i and the different values of i distinguish $s_i$. The cost function H is defined, for example, as in Equation (1) below.

[Math. 1]

$$H = \sum_{i,j=1}^{N-1} J_{ij} s_i s_j + \sum_{i=1}^{N-1} h_i s_i \qquad \text{Equation (1)}$$

$J_{ij}$ being the right side of Equation (1) is the value of column i row j of matrix J, and both i and j can take values 1, 2, ... , N-1. $h_i$ being right side of Equation (1) is the value of column i of vector h, where i can take values 1, 2, ... , N-1. $J_{ij}$ and $h_i$ can take real values. Equation (1) is a general expression for real coefficient polynomials of the first and second degree consisting of N-1 variables s; that take only 1 or -1 values. Further, if assume that $s_N = 1$, $J_{iN} = h_i$, and i

and j can also take N values, then Equation (1) is represented by Equation (2).
[Math. 2]

$$H = \sum_{i,j=1}^{N} J_{ij} s_i s_j \qquad\qquad \text{Equation (2)}$$

When $s_N$ can take the values 1 and -1, then Equation (1) is included in Equation (2) as a special case. Hereinafter, the cost function is considered in the form of Equation (2). It is also sufficient as a general expression to assume that all the values of $J_{ij}$ with i > j are 0. Therefore, in the following, all values of $J_{ij}$ with i $\geq$ j are assumed to be 0, and only $J_{ij}$ with i < j are considered. The Ising problem is to find the combination of values of s; (i = 1, 2, ... , N) that minimizes the cost function H in Equation (2) when the matrix J is specifically given.

As mentioned above, one method for solving the Ising problem is quantum annealing. One of the quantum annealing methods is the LHZ method. The quantum annealing of the LHZ method minimizes the cost function $H_{LHZ}$ shown below to solve the Ising problem whose cost function is expressed by Equation (2).
[Math. 3]

$$H_{LHZ} = \sum_{i<j} J_{ij}\sigma_{ij} - C \sum_{<i,j,k,l>} \sigma_{ik}\sigma_{il}\sigma_{jk}\sigma_{jl} \qquad\qquad \text{Equation (3)}$$

$J_{ij}$ in Equation (3) is the same as $J_{ij}$ in Equation (2). $\sigma_{ij}$ is a variable that can take the values 1 and -1 and is a binary variable like $s_i$. In Equation (3), the letter $\sigma$ is used to distinguish it from $s_i$. i and j in $J_{ij}$ take values in the same range as i and j in Equation (2). However, i and j in $\sigma_{ij}$ can be i = j in addition to the range of in $J_{ij}$. $\sigma_{ii}$ is introduced in order to simplify the expression and is always equal to 1 and is a constant, not a variable. c is a parameter that should be adjusted in the range of positive values.

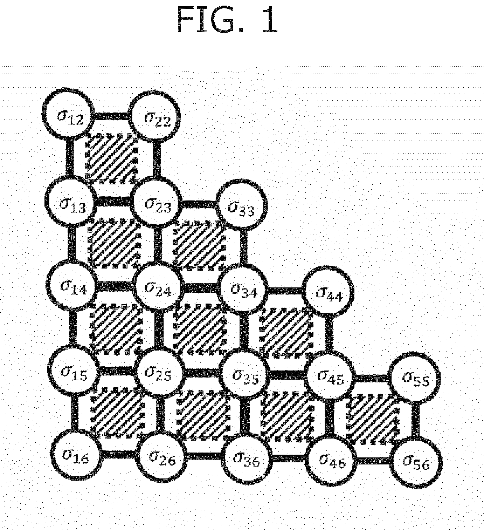

Fig. 1 is an explanatory diagram showing four-body interaction of the cost function using an LHZ method. The range of the sum of the products ($\sigma_{ik}$ $\sigma_{il}$ $\sigma_{jk}$ $\sigma_{jl}$) of the four $\sigma$ can be understood by Fig. 1. In Fig. 1, the variable $\sigma_{ij}$ in Equation (3) is represented as a variable on a grid point. The sum of the products ($\sigma_{ik}$ $\sigma_{il}$ $\sigma_{jk}$ $\sigma_{jl}$) of the four $\sigma$ is the sum of the products of the $\sigma$ described at the four vertices of the square represented by the shaded area in Fig. 1. An example of one product of the four $\sigma$ is $\sigma_{13}$ $\sigma_{14}$ $\sigma_{23}$ $\sigma_{24}$.

Since the value of $\sigma$ is 1 or -1, the product ($\sigma_{ik}$ $\sigma_{il}$ $\sigma_{jk}$ $\sigma_{jl}$) of the four $\sigma$ is also 1 or -1. When C is the large positive value, the product ($\sigma_{ik}$ $\sigma_{il}$ $\sigma_{jk}$ $\sigma_{jl}$) of the four $\sigma$ in the second term on the right side of Equation (3) (hereafter referred to as the second sum) is 1 in the combination of values of the $\sigma_{ij}$ (i = 1, 2, ... , N, j = i+1, i+2, .... , N) that minimizes $H_{LHZ}$. There are multiple combinations of $\sigma_{ij}$ (i = 1, 2, ... , N, j = i+1, i+2, .... , N) where all product of the four $\sigma$ in the second sum are 1, and the second sums are equal in those combinations. Among them, the one that minimizes $H_{LHZ}$ minimizes $\sum_{i<j} J_{ij} \sigma_{ij}$. Further, when all four products in the second sum are equal to 1, $\sigma_{ij}$ = s; $s_j$ can be set. This s; is a binary variable that can take the values 1 and -1, similar to s; in Equation (2). In fact, when $\sigma_{ij}$ = $s_i$ $s_j$, $\sigma_{ik}$ $\sigma_{il}$ $\sigma_{kj}$ $\sigma_{ij}$ = s; $s_k$ $s_i$ si $s_k$ $s_j$ $s_i$ $s_j$ = 1. The fact of $\sigma_{ii}$ = 1 as above satisfies $\sigma_{ii}$ = s; s; = 1. Therefore, the combination of the value that minimizes $H_{LHZ}$ minimizes when C is the large positive value gives s; (i = 1, 2, ... , N) that minimizes $\sum_{i<j} J_{ij}$ s; $s_j$. In other words, the s; obtained here minimizes the cost function H in Equation (2) and is the solution to the initial Ising problem.

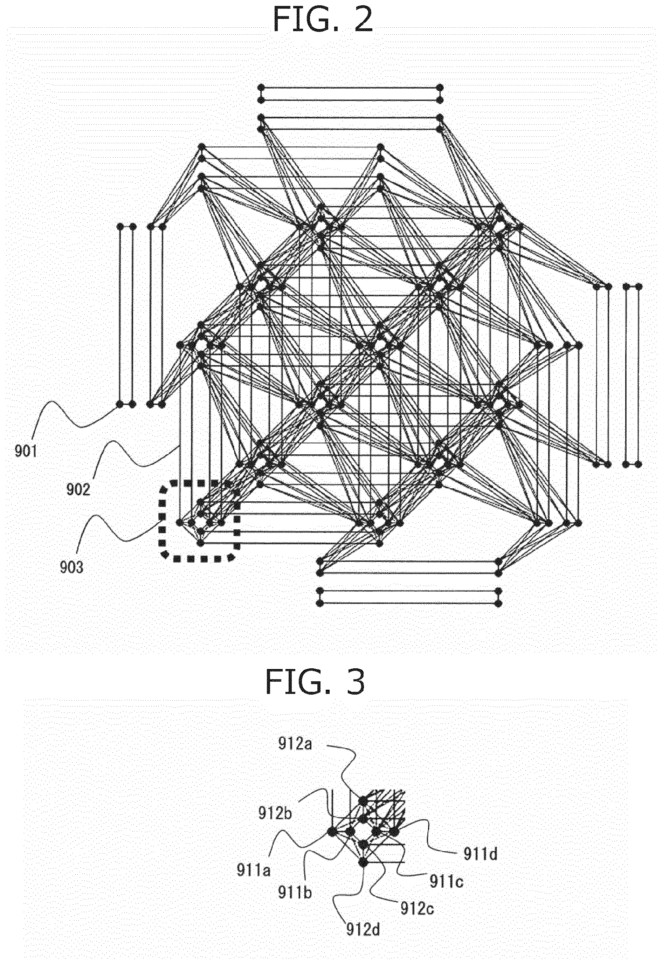

Next, the minimum necessary matter about the Pegasus graph is explained. Fig. 2 is an explanatory diagram showing an example of a Pegasus graph. A Pegasus graph comprises multiple nodes 901 and edges 902 connecting them. A Pegasus graph consists of a sequence of units 903. The unit 903 is a unit graph that constitutes a Pegasus graph. In a Pegasus graph, the nodes 901 and the units 903 are arranged periodically. In other words, the Pegasus graph can be said to be information representing the hardware configuration of the quantum annealing machine. The hardware configuration represents, for example, a plurality of qubits and the structure coupling between the plurality of qubits. This periodic arrangement is explained below.

The coordinates in the Pegasus graph are denoted by (u, w, k, z). u can take 0, 1, w can take 0, 1, ... , M-1, k can take 0, 1, ... , 11, z can take 0, 1, ..., M-2. M is a parameter that represents the size of the entire Pegasus graph. For example, M is 3 for the Pegasus graph shown in Fig. 2. Fig. 3 is an explanatory diagram showing an example of a unit in a Pegasus graph. As shown in Fig. 3, u of the four nodes 911a, 911b, 911c, 911d, that aligns horizontally in the unit, is 0. u of the four nodes 912a, 912b, 912c, 912d, that aligns vertically, is 1. The nodes with u = 0 are grouped together every 12 horizontally adjacent nodes. In the example shown in Fig. 2, the node corresponds to three units and is called a tile. The tiles align in a square grid in the horizontal and vertical directions. The horizontal numbers of the tiles are represented by w. The vertical numbers of the tiles are represented by z. In other words, (u, w, k, z) is a parameter that represents the repetitive structure in the Pegasus graph in which a certain structure (denoted as "unit structure") appears repeatedly, and the structure in each unit structure. The unit structure does not necessarily have to be a single structure, but can be any structure that is determined to be a unit structure. The determination process may be based, for example, on the similarity of two structures or on the degree of difference between different structures with respect to the same structure. The determination process determining a repetitive structure is not limited to the example described above.

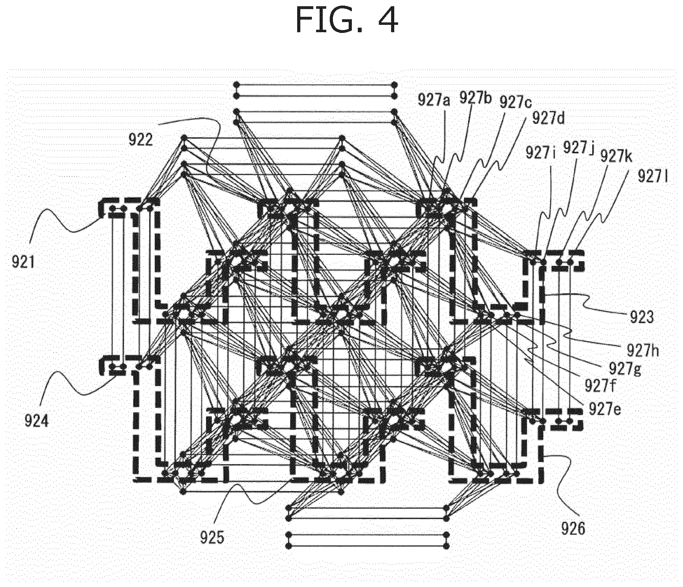

Fig. 4 is an explanatory diagram showing a tile with u=0 in a Pegasus graph. In the example shown in Fig. 4, the tile with u = 0, w = 0, z = 0 is tile 921. The tile with u = 0, w = 1, z = 0 is tile 922. The tile with u = 0, w = 0, z = 1 is tile 924. u = 1 nodes are also grouped as a tile. However, unlike the case of u=0, the u=1 nodes are grouped as tiles for every 12 vertically adjacent nodes. The vertical number of a tile is then denoted by w, and the horizontal number is denoted by z.

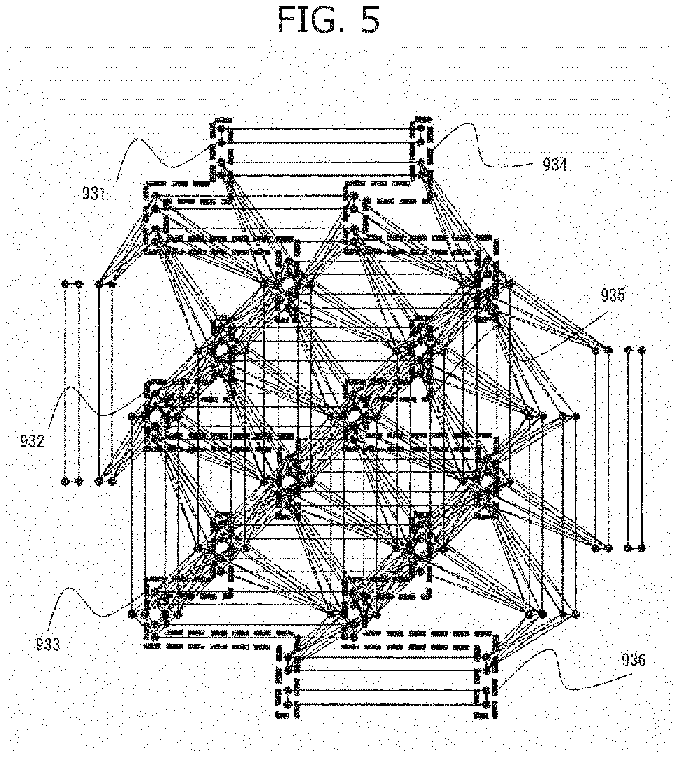

Fig. 5 is an explanatory diagram showing a tile with u = 1 in a Pegasus graph. In the example shown in Fig. 5, the tile with u = 1, w = 0, z = 0 is tile 931. The tile with u = 1, w = 1, z = 0 is tile 932. The tile with u = 1, w = 0, z = 1 is tile 934. That is, for both u=0 and 1, the number of the tile for the direction in which the node is aligned is represented by w, and the number of the tile for the direction orthogonal to it is represented by z. k represents the number of the node within each tile. For example, in Fig. 4, the tile with u=0, w=2, and z=0 is tile 923, and nodes 927a, 927b, 927c, ... , 927l have k = 0, 1, 2, ... , 11.

Next, the representation of the Ising problem on a Pegasus graph is explained. Representing the Ising problem on a Pegasus graph is equivalent to appropriately allocating the variables of the cost function of the Ising problem to the nodes of the Pegasus graph. What constitutes appropriate is discussed below. The allocation is expressed by enumerating the nodes to which each of the variables of the Ising problem, i.e., cost function, is allocated. There can be more than one node to which a variable is allocated.

The background of allocating the variables of the cost function to the nodes of the Pegasus graph is that by doing so, the Ising problem can be solved by a machine that uses the Pegasus graph, such as a quantum annealing machine. Although a quantum annealing machine does not necessarily have to be used, it is assumed that a quantum annealing machine is used to solve the Ising problem in the following.

Quantum annealing machines have qubits, and couplings between qubits. A qubit has two main states, and which of the two states a qubit is in can be treated as a binary variable. In the quantum annealing machine, the energy of the entire qubit can also be defined. The method of finding the combination of states of a qubit whose energy is lowest is quantum annealing. The quantum annealing machine performs quantum annealing and aims to find a combination of states of a qubit with the lowest energy. Finding a combination can be used to solve the Ising problem as follows. In the quantum annealing machine, the two states of a qubit correspond to the Ising variable, and the energy of the entire qubit corresponds to the cost function of the Ising problem. This means that obtaining a low energy state of the entire qubit in the quantum annealing machine is to find a combination of variables that reduces the value of the cost function of the corresponding Ising problem.

To make the energy of the entire qubit of a quantum annealing machine correspond to the cost function of the Ising problem, the two states of the qubits are made correspond to the variables of the Ising problem, and the coupling between the qubits is made correspond to the product of the variables in the cost function. To make the coupling correspond to the product of variables, for example, the strength of the coupling between the i-th qubit and the j-th qubit is made to be equal to $J_{ij}$ in the cost function. Then, if all the elements of the matrix J of the cost function are made to correspond to the strength of the coupling between the qubits, the energy of the whole qubit corresponds to the cost function of the Ising problem. Therefore, to solve the Ising problem with a quantum annealing machine, the matrix J is input to the quantum annealing machine, and the quantum annealing machine adjusts the strength of the coupling between the qubits to match $J_{ij}$. However, the coupling between qubits in the quantum annealing machine does not necessarily exist for all combinations of qubits. In fact, the coupling between qubits in the quantum annealing machine developed by D-wave Systems inc. has either a Pegasus graph structure or a Chimera graph structure. In this specification, only Pegasus graph is focused on and Chimera graph is not considered. The qubits correspond to the nodes of the Pegasus graph. The coupling between qubits corresponds to the edges of the Pegasus graph.

As explained above, the variables of the Ising problem, the qubits, and the nodes of the Pegasus graph have correspondence. At the same time, the product of the variables of the Ising problem, the coupling of the qubits, and the edges of the Pegasus graph also have a correspondence. In order to solve the Ising problem with a quantum annealing machine, the variables of the Ising problem are made correspond to the qubits. This is equivalent to making the variables of the Ising problem correspond to the nodes of the Pegasus graph. In addition, to make the product of the variables of the Ising problem correspond to the coupling of the qubits, the products of the variables are made correspond to the edges of the Pegasus graph.

As described above, when solving the Ising problem with a quantum annealing machine, the variables of the problem are allocated to the nodes of the Pegasus graph. The allocation is also such that the products of the variables of the Ising problem correspond to the edges of the Pegasus graph. Such allocation is an appropriate allocation. Once the appropriate allocation is obtained, the quantum annealing machine knows which qubits to make the product of the variables of the Ising problem correspond to which coupling between qubits on the Pegasus graph. When this allocation and the matrix J of the Ising problem are input to the quantum annealing machine, the quantum annealing machine can make the strength of the coupling between the qubits correspond to the matrix J. As a result, the quantum annealing machine can solve the Ising problem.

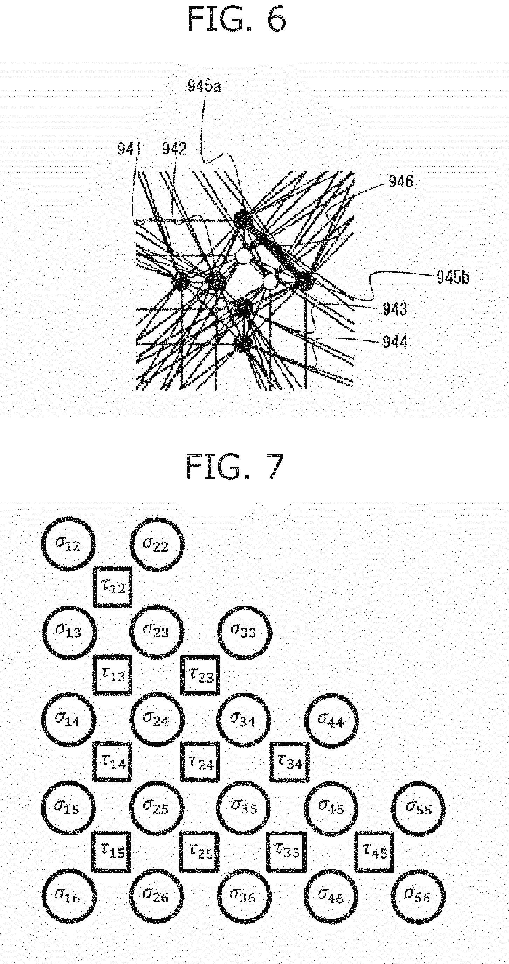

As mentioned above, in general, in order to represent the Ising problem on a Pegasus graph, it is required that variables are appropriately allocated to nodes. A variable may be allocated to multiple nodes. In order to illustrate exactly what type of allocation is appropriate, first, a chain is introduced. A chain is a set of nodes to which the same variable is allocated, and is a group of nodes connected by edges. Here, variables are determined to be identical when their values, including even their subscripts, are identical. For example, s and $\sigma$ are different variables. For example, $s_i$ and $s_j$ are different variables when i and j are different, and identical variables when i and j are the same. The number of nodes in a chain may be one or more. When the number of nodes in a chain is multiple, all nodes in the chain are connected by edges to at least one of the nodes in the same chain. Fig. 6 is an explanatory diagram showing an example of a chain.

The condition for appropriate allocation is that for every pair of variables that are products in the cost function of the Ising problem, the two chains in each pair are connected by an edge. The connection of chains by an edge means that at least one of the nodes in one chain is connected to at least one of the nodes in another chain by an edge. A pair of variables that is a product is generally the pair of $s_i$ and $s_j$ represented by i and j in Equation (1) with $J_{ij} \neq 0$. If $J_{ij} = 0$, the pair of $s_i$ and $s_j$ is interpreted as not appearing as a product in the cost function.

For example, the chain shown in Fig. 6 gives the appropriate allocation to the Pegasus graph of the cost function of the Ising problem expressed in Equation (4) below.

[Math. 4]

$$H = \sum_{i,j=1}^{5} s_i s_j \qquad \text{Equation (4)}$$

Nodes 941, 942, 943, and 944 shown in Fig. 6 correspond to a chain consisting of one node each. Nodes 945a and 945b constitute a chain of two nodes connected by an edge 946. In Equation (4), there are five variables in the Ising problem, and any pair of two variables appears as a product in the cost function. In Equation (4), $J_{ij} = 1$ for all i and j. Each of the variables in Equation (4) is allocated to one of the chains illustrated in Fig. 6. In this case, any variable can be allocated to any chain as long as there is no overlap, which is the appropriate allocation. For example, $s_1$ is allocated to the node 941 in Fig. 6. $s_2$ is allocated to the node 942. $s_3$ is allocated to the node 943. $s_4$ is allocated to the node 944. ss is allocated to the chain consisting of the node 945a and the node 945b.

The background of the condition on allocation is as follows. As mentioned above, when solving the Ising problem with a quantum annealing machine, the products of the variables in the cost function of the Ising problem are made correspond to the edges of the Pegasus graph. Therefore, the condition for allocation of variables to nodes is that, primitively, the nodes to which two variables that are products in the cost function are allocated are connected by an edge. However, not all pairs of nodes in a Pegasus graph are connected to each other by edges. Therefore, a chain is used.

The nodes in the chain are allocated the same variables of the Ising problem. Therefore, if two chains are connected by an edge, the products of the variables corresponding to the two chains could be represented on the Pegasus graph. Therefore, by constructing the chains well, it is possible to represent all products of variables in the cost function as edges between chains on the Pegasus graph. In fact, an example of how to do this is given in non-patent literature 1. This is the background for the condition discussed above.

When solving a problem with a quantum annealing machine, etc. by allocating variables to nodes on the Pegasus graph, there is a point to be noted. That is, the quantum annealing machine is not aware of the existence of the chain. In addition, the quantum annealing machine solves the problem in a condition that the qubits of the nodes in the chain are considered as different variables. However, in order to solve the Ising problem, the nodes in the chain are allocated the same variables as the variables in the original Ising problem. As a result, it is required that the states of the qubits of the nodes in the chain are all the same. Therefore, the coupling between the qubits corresponding to the edges connecting the nodes in the chain is strengthened, so that the qubits of the nodes in the chain are consequently all in the same state. The strength of coupling is specified by the user, for example, when solving the problem with the quantum annealing machine.

The fact that the quantum annealing machine solves a problem with different nodes on the Pegasus graph as different variables also implies the following. That is, when variables are allocated to the Pegasus graph by different allocations for an Ising problem, the representation of the problem on the Pegasus graph obtained by those different allocations is interpreted as different problems by the quantum annealing machine. Therefore, when different allocations exist, which allocation should be made should be considered.

Allocations that satisfy the above condition for a particular problem are generally not unique. Among the multiple possible allocations, allocation that uses fewer nodes is preferable. This is because when solving a problem with a quantum annealing machine, etc., it tends to be more difficult to obtain a correct solution when more nodes on the Pegasus graph are used. In addition, it is desirable that the number of nodes used be unbiased for each variable. This is because it is desirable for the effect of the allocation to be uniform. In particular, the reason why it tends to be more difficult to obtain the correct answer when more nodes are used is as follows.

When solving the Ising problem, the larger the number of variables, the more difficult it is to obtain the correct answer, in general, because the number of combinations increases. This can also be rephrased as the computation time to reliably obtain the correct answer increases. The quantum annealing machine then actually solves the problem represented on the Pegasus graph. The number of variables in the problem solved by the quantum annealing machine is the number of nodes used on the Pegasus graph. Therefore, when the number of nodes used by allocation is large, the number of variables in the problem solved by the quantum annealing machine is also large, making it difficult to obtain a correct solution. In other words, even if the original Ising problem is the same, different allocations will change the difficulty of obtaining the correct solution using the quantum annealing machine. Therefore, among multiple possible allocations, allocation with fewer nodes used is preferable.

The techniques described in above non-patent literature 1 and non-patent literature 2 do not aim to find allocations with a small number of used nodes. It is not easy to find the allocation that meets the condition as the appropriate allocation and that uses a small number of nodes.

In the following, an example embodiment, in which the number of nodes used is suppressed and an unbiased correspondence can be obtained as the correspondence between the variables of the Ising problem and the nodes of the graph for solving the Ising problem when effectively implementing the LHZ method on a Pegasus graph, is explained. For convenience of explanation, the term "unbiased" can be read as "small bias". For example, the determination of small bias is based on whether or not the bias meets a predetermined criterion. The predetermined criterion is a criterion for determining that the bias is small. For example, the criterion is that the bias is smaller than a predetermined value.

<Overview of example embodiment>

Before describing the example embodiment in detail, an overview is explained. The allocation device and the allocation method of this example embodiment represent the Ising problem by an LHZ method, and when the Ising problem is solved by representing LHZ method on a Pegasus graph, the variables of the Ising problem are allocated to the nodes on the Pegasus graph.

The allocation method of this example embodiment can be roughly divided into two steps.

The first step converts the cost function (Equation (3)) used in the LHZ method to a cost function in which the product of three or more variables does not appear. As this conversion, for example, the method described in non-patent literature 3 is used. The converted cost function is as follows.

[Math. 5]

$$
H = -\sum_{i,j} J_{ij}\sigma_{ij}
$$

$$
-C\sum_{i,j}\left[-2\tau_{ij}\left(\sigma_{ij} + \sigma_{ij+1} + \sigma_{i+1,j} + \sigma_{i+1,j+1}\right) + \sigma_{i,j}\sigma_{i,j+1} + \sigma_{i,j}\sigma_{i+1,j}\right.
$$

$$
\left. + \sigma_{i,j}\sigma_{i+1,j+1} + \sigma_{i,j+1}\sigma_{i+1,j} + \sigma_{i,j+1}\sigma_{i+1,j+1} + \sigma_{i+1,j}\sigma_{i+1,j+1}\right] \quad \text{Equation (5)}
$$

$J_{ij}$, $\sigma_{ij}$, and C in Equation (5) are the same as $J_{ij}$, $\sigma_{ij}$, and C in Equation (3) that is the cost functions before the conversion. In Equation (5), i and j can also take values in the same range as i and j in Equation (3). $\tau_{i,j}$ is the Ising variable which can take 1 or -1, and is a variable (auxiliary variable) newly generated by the conversion.

Since the cost function of Equation (5) does not include a product consisting of three or more Ising variables, when it is expressed as the Ising variable s without distinguishing between $\sigma$ and $\tau$, Equation (5) can be expressed in the form of Equation (2). The coefficient $J_{ij}$ of the $s_i$ and $s_j$ can be calculated and derived based on the value of $J_{ij}$ and C, although it is generally different from $J_{ij}$ that appears in Equation (5).

The combination of values of $\sigma_{ij}$ that minimizes the cost function of Equation (5) is the same as the combination

of values of $\sigma_{ij}$ that minimizes the cost function of Equation (3). The value of $\tau_{i,j}$ is determined when the cost function is minimized, but it is not included in the solution to the problem to be solved (problem determined by $J_{ij}$). $\tau_{i,j}$ is introduced to decompose the four products of the variable $\sigma$ in the cost function of Equation (5) into two products.

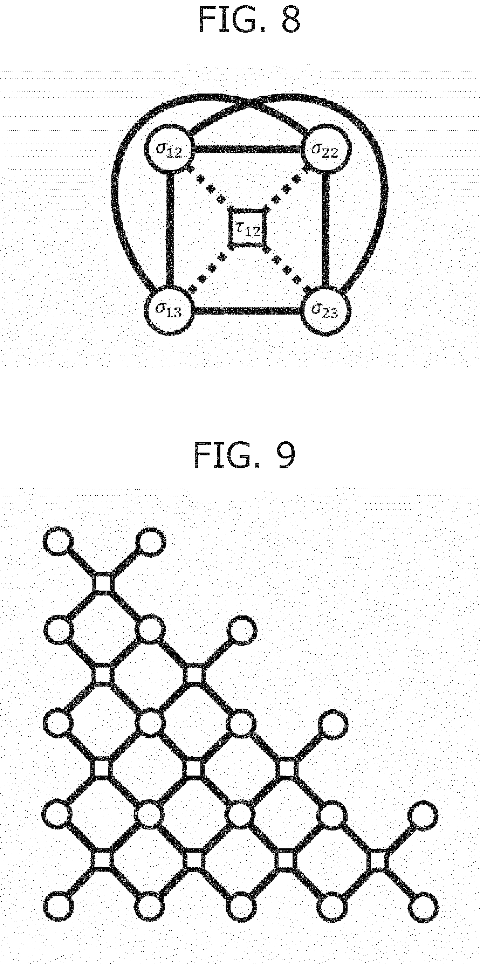

Fig. 7 is an explanatory diagram showing a structure of a product between variables in the cost function. When the variables in the cost function expressed in Equation (5) are variables on the grid points as illustrated in Fig. 7, the products of variables in the cost function can be described as edges between grid points. Edges between grid points are not shown in Fig. 7. For example, when only the parts of $\sigma_{12}$ , $\sigma_{13}$ , $\sigma_{22}$ , $\sigma_{23}$ , and $\tau_{12}$ are taken out, and the edges are drawn, they are shown in Fig. 8. Fig. 8 an explanatory diagram showing a part of a structure of a product between variables in the cost function. Edges between two $\sigma$ are illustrated by solid lines, and edges between $\sigma$ and $\tau$ are illustrated by dotted lines. Similar structures can be seen in other parts of the grid.

Fig. 9 is an explanatory diagram showing a part of a structure of a product between variables in the cost function. As a periodic structure representing the relationship between variables in the cost function, a square grid can be considered as shown in Fig. 9. The circle represents $\sigma$ and the square represents $\tau$. The edges shown in Fig. 9 represent some of the products of the variables of the cost function expressed in Equation (5). The product of variables is the product of $\sigma$ and $\tau$, for example. There are also products of $\sigma$ with each other in the cost function, but they are not represented as edges in Fig. 9. They are products of the variables between the variables of the second proximity node and the variables of the third proximity node, based on the spatial distance between the nodes in Fig. 9. This grid structure is used in the second step described below.

The second step allocates the variables $\sigma$ and $\tau_{i,j}$ in the cost function of Equation (5) to multiple nodes on the Pegasus graph. The aim is to reduce the overall number of nodes used by constructing a chain with a small number of nodes. It also aims to achieve unbiased allocation. The policy for constructing a chain is described below. In particular, the policy for constructing a chain with a small number of nodes and its specific method are described below.

The basic policy of constructing the allocation by chains of fewer nodes is to make the periodic structure of the cost function in Equation (5), which represents the relationship between variables, correspond to the periodic structure of the Pegasus graph. The periodic structure for the cost function is the square grid structure described above. Fig. 9 shows the periodic structure corresponding to the structure shown in Fig. 7. As mentioned above, in the square grid structure, only variables allocated to adjacent grid points appear in the cost function as a product. Adjacent to a grid point means that the grid for which a product of the variables defined at certain grid is defined. In Pegasus graphs, there are only a limited number of pairs of nodes that are connected by edges. Nodes connected by an edge can be interpreted as adjacent nodes. The square grid structure is reflected in the Pegasus graph, allowing variables that make a product in the cost function to be allocated to adjacent nodes or to other nodes adjacent to the adjacent nodes. This eliminates the need for longer chains.

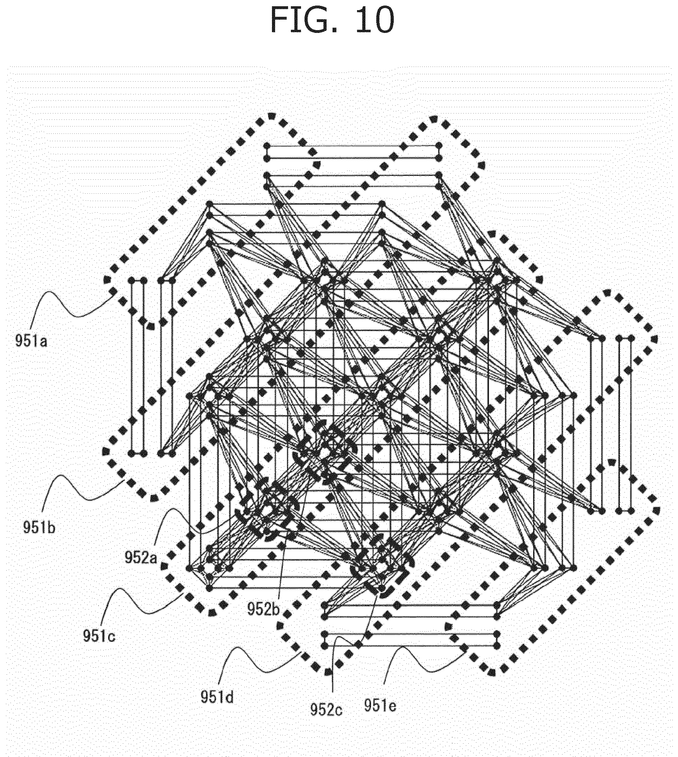

To explain how exactly the square grid structure corresponds to the structure of the Pegasus graph, first, the structure of the Pegasus graph is considered. Fig. 10 is an explanatory diagram showing unit sequences (rows of units) in a Pegasus graph. A unit in the Pegasus graph has a connection with several other units. In the example shown in Fig. 2, the units, which locate in lower left side and upper right side from a certain unit, have the most connections. As sequences of units with many such connections, sequences of units 951a-951e extending from the lower left to the upper right are considered, as shown in Fig. 10. Hereinafter, each of these will simply be referred to as a unit sequence. However, as the unit sequences 951a, 951b, 951d, 951e in Fig. 10, near the edge of the entire Pegasus graph, the unit sequence may contain units with some nodes missing. In the Pegasus graph, there are only edges connecting units within a unit sequence and edges connecting adjacent unit sequences. An adjacent unit sequence refers to a pair of unit sequences connected by edges, such as the unit sequence 951b and the unit sequence 951c in Fig. 10. The unit sequences 951a, 951b, 951d, 951e can also be group information, in which multiple components (units) in the quantum annealing machine hardware are grouped (unit sequences) according to the connection relationships among the components. The group information may be given group information, or it may be information obtained in accordance with the process of grouping according to the connection relationships among the components.

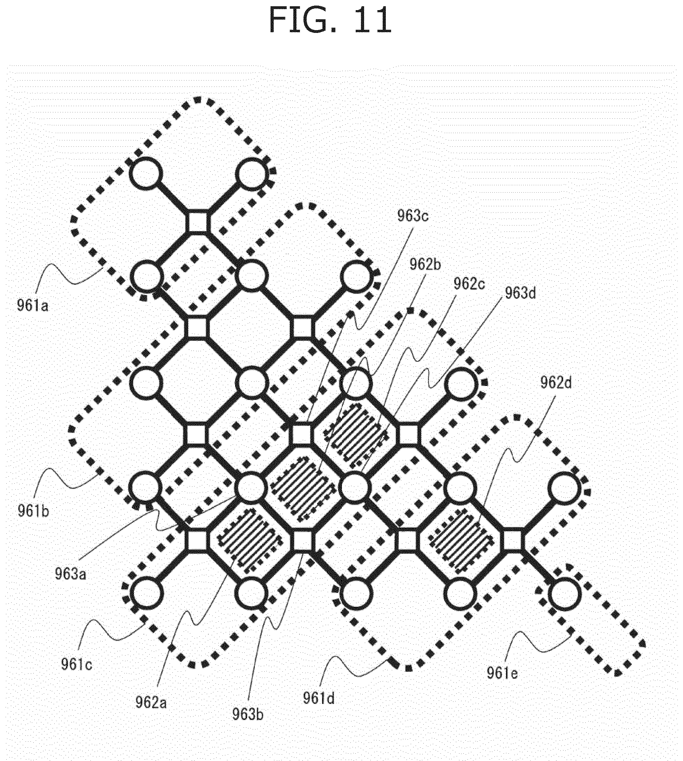

Next, consider periodically dividing of the grid points of the square grid (refer to Fig. 9), which represents the relationship between variables in the cost function of Equation (5), as shown in Fig. 11. Fig. 11 is an explanatory diagram showing a part of a structure of a product between variables in the cost function and a plaquette sequence. A square consisting of four grid points is called a plaquette, and each of the partitions here is called a plaquette sequence. The plaquette sequence is a part 961b in Fig. 11, for example. Near the edges of the entire grid points representing variables, there are parts that are not complete plaquettes consisting of four grid points, but these and others are divided periodically, and each part generated by the division is called a plaquette sequence. Accordingly, in this example embodiment, the part 961a and the part 961e are also plaquette sequences.

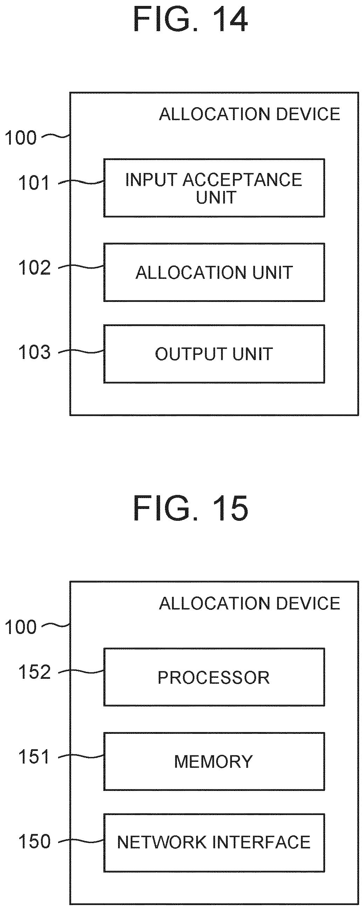

As described below with reference to Fig. 14, the allocation unit 102 may execute the process of dividing the multiple variables as illustrated in Equation (5), into multiple processing groups (plaquette sequence) having a periodic structure according to the reference relationship (or relation) in the processing procedure, based on the information representing the processing procedure for calculating the cost function from multiple variables in the Ising problem. In other words, the allocation unit 102 identifies the multiple variables used in the processing, including the subscripts, by performing lexical analysis, parsing, etc. of the processing (or program) as illustrated in Equation (5). When two variables are multiplied, the allocation unit 102 determines that there is a reference relationship (or relation) between the two variables in the process. The allocation unit 102 divides the process (or program) into multiple processing groups (plaquette sequence) that have a periodic structure by extracting the periodic structure from the relation. The process of determining the periodic structure may be based on the unit structure as described above, or it may be a different method.

As mentioned above, the square grid structure is made correspond to the structure of the Pegasus graph in allocating variables. It means that the plaquette sequence is made correspond to the unit sequence. Variables in one plaquette sequence are all allocated to the same unit sequence. Different plaquette sequences are allocated to different unit sequences. The product of variables belonging to different plaquette sequences is then represented as an edge between different unit sequences.

Next, an overview of allocation of variables is explained. Allocation of variables in a plaquette sequence to nodes in a unit sequence is focused. First, consider a single plaquette (for example, the plaquette 962a in Fig. 11). The four variables of the plaquette are allocated to nodes in one unit (for example, the unit 952a in Fig. 10). Specifically, the four variables of the plaquette are allocated to the four bottom left nodes in the unit (nodes 911a, 911b, 912c, 912d in Fig. 3). The nodes and edges in the plaquette are a subgraph of the four nodes and the edges connecting them in the Pegasus graph. Therefore, a plaquette can be represented by four nodes in a Pegasus graph.

Four variables of the adjacent plaquette in the plaquette sequence (for example, the plaquette 962b in Fig. 11) are allocated to the remaining four nodes in the same unit (unit 952a in Fig. 10) in the Pegasus graph. Due to symmetry of the unit, this new plaquette can also be represented by the remaining four nodes (nodes 911c, 911d, 912a, 912b in Fig. 3). There are two variables (variables 963a, 963b in Fig. 11) that belong to both of the two plaquettes. These is allocated to the two nodes in the unit of the Pegasus graph. Specifically, the variable 963a will be allocated to the node 911b and the node 912b. The variable 963b will be allocated to the node 911c and the node 912c. These two nodes are connected by an edge. The node to which the variable is allocated becomes a chain of this variable. Further, the product of variables belonging to two plaquettes can also be represented by an edge in a unit. Therefore, one unit can represent all the variables in the two plaquettes and their products.

Consider a further adjacent plaquette (for example, plaquette 962c in Fig. 11) in the same plaquette sequence. This plaquette is allocated to the four lower left nodes (nodes 911a, 911b, 912c, 912d in Fig. 3) of the adjacent unit (unit 952b in Fig. 10) in the unit sequence. Variables that belong to both plaquette 962b and the plaquette 962c (variables 963c and 963d in Fig. 11) are allocated to two nodes which are one node in the unit 952a and one node in the unit 952b. Specifically, the variable 963c is allocated to the node 912a in the unit 952a and the node 911a in the unit 952b. Thee variable 963d is allocated to the node 911d in the unit 952a and the node 912d in the unit 952b. These two nodes are connected by an edge. The node to which the variable is allocated becomes a chain for this variable. The product of variables belonging to the plaquette 962b and the plaquette 962c can also be represented by an edge between units. Therefore, the two units 952a, 952b can represent all the variables of the two plaquettes 962b and 962c and their products.

The above process is repeated so that the variables of the plaquette sequence and the products of variables in the plaquette sequence are appropriately allocated to the nodes in the unit sequence. The, the length of the chain for each variable is 2.

Next, consider that products between variables belonging to adjacent plaquette sequences (plaquette sequence 961c and plaquette sequence 961d in Fig. 11) are represented as edges between adjacent unit sequences. Specifically, consider the products between variables belonging to the plaquette 962c and the plaquette 962d in Fig. 11. The variables in the plaquette 962c and in the plaquette 962d are allocated to the unit sequence 951c and the unit sequence 951d in Fig. 10, respectively. In particular, the allocation to the unit 952b and the unit 952c in Fig. 10 allows all products of variables between plaquettes to be represented by edges.

By repeating the above process, all products between variables belonging to the first plaquette sequence and the second plaquette sequence can be represented as edges between the first unit sequence and the second unit sequence. No new chains are newly introduced for representing the product of variables between the plaquette sequences. Nor are any new nodes added to the existing chains. Therefore, the length of the chain for each variable remains 2.

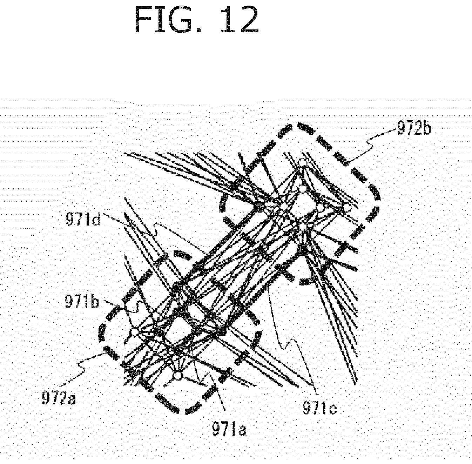

Fig. 12 is an explanatory diagram showing a chain. When considering any two adjacent units in a unit sequence as illustrated in Fig. 12, the chains used in the above allocation method are classified into four types that are chains 971a, 971b, 971c, and 971d. These types of chains are described below. When allocating variables, the units in the Pegasus graph and the chain types are specified. In that way, the node to be used is uniquely specified. Once the position of the unit to which an Ising variable is allocated and the type of chain are determined, all variables can be allocated according to the procedure described above. With this allocation, all products between variables are represented as edges of the Pegasus graph. As described below, the parameters for determining the allocation of the first Ising variable are represented as $c_0$, $w_0$, $k_0$, and $z_0$. These parameters can also be said to represent the criteria for making the repetitive structure of the relationship between variables in the cost function correspond to the repetitive structure that the Pegasus graph. Therefore, as described below, such given criteria can be used to make the repetitive structure in the cost function correspond to the repetitive structure in the Pegasus graph.

Hereinafter, an example embodiment is explained in detail with reference to the drawings.

[Description of configuration]

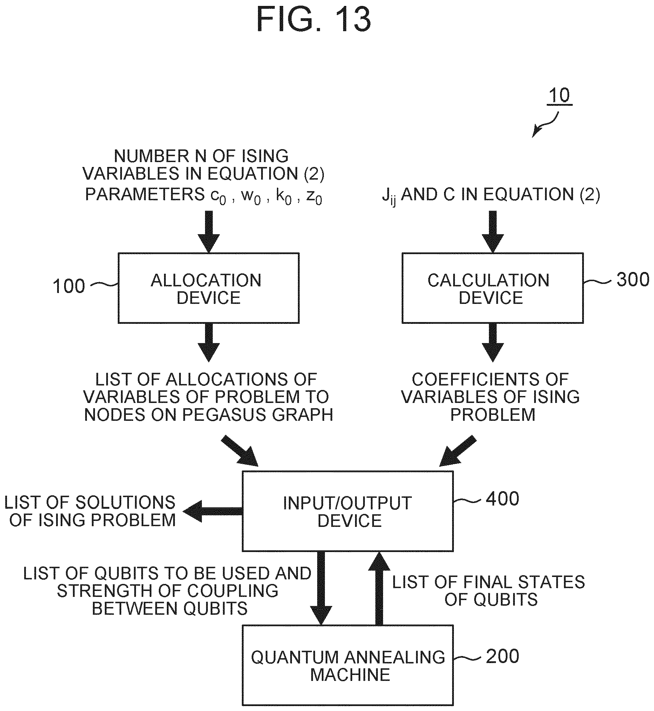

Fig. 13 an explanatory diagram showing an example of the computing system 10 of this example embodiment. In this example embodiment, the allocation device 100 determines the correspondence between variables in the Ising problem and nodes. In the computing system 10 shown in Fig. 13, it is assumed that a quantum annealing machine 200 is used to solve the Ising problem. Instead of the quantum annealing machine 200, any other device that solves the Ising problem using the Pegasus graph may be used. The computing system 10 also includes a calculation device 300 and an input/output device 400 as auxiliary devices for inputting the problem to the quantum annealing machine 200 and obtaining an output of the calculation result. Therefore, in the example shown in Fig. 13, the computing system 10 has the allocation device 100, the quantum annealing machine 200, the calculation device 300, and the input/output device 400.

The allocation device 100 is a device that accepts as input the number N of Ising variables in the Ising problem and parameters $c_0, w_0, k_0, z_0$ for the allocation, and outputs information indicating correspondence between the variables in the Ising problem and the nodes in the Pegasus graph. In this example embodiment, the information indicating the correspondence between the variables of the Ising problem and the nodes of the Pegasus graph is input to the input/output device 400. The information may be input to the input/output device 400 through an input operation by a user or directly from the allocation device 100. The coefficients of the variables in the Ising problem are input to the input/output device 400. The input of the coefficients to the input/output device 400 may be done through an input operation by a user or directly from the calculation device 300. The input/output device 400 is a device that performs input/output processing to/from the quantum annealing machine 200. The input/output device 400 outputs to the quantum annealing machine 200 qubits to be used and strength of the coupling between the qubits, based on the output results of the allocation device 100 and the calculation device 300. The input/output device 400 also obtains the final states of the qubits from the quantum annealing machine 200 and outputs the solution to the Ising problem.

The allocation device 100, the calculation device 300, and the input/output device 400 are general computers, i.e., so-called classical computers. Some or all of the functions of the calculation device 300 and the input/output device 400 may be incorporated in the allocation device 100.

Some or all of the allocation device 100, the quantum annealing machine 200, the calculation device 300, and the input/output device 400 may be realized by a cloud. For example, only the quantum annealing machine 200 and the input/output device 400 may be realized by a cloud. When only the quantum annealing machine 200 and the input/output device 400 are realized by a cloud, outputs from the allocation device 100 and the calculation device 300 may be input to the input/output device 400 through a network. The output from the input/output device 400 is then input to the quantum annealing machine 200, and the output from the quantum annealing machine 200 is input to the input/output device 400. Furthermore, the output of the calculation results from the input/output device 400 is done through the network.

As mentioned above, the allocation device 100 accepts as input the number N of Ising variables in the Ising problem and the parameters $c_0, w_0, k_0, z_0$ of the node to which the Ising variable $\sigma_{1,2}$ is allocated. The allocation device 100 then outputs information indicating to which node on the Pegasus graph the Ising variables of the cost function are to be allocated based on the expression of the cost function of the Ising problem (Equation (2)).

The calculation device 300 also receives as input the coefficients $J_{ij}$ of the variables of the Ising problem that it is trying to solve, and the parameter C, which should be adjusted in the range of positive values. The calculation device 300 then calculates and outputs the coefficients of the Ising variables of the cost function shown in Equation (5) based on those input. The coefficients of the Ising variables means $J_{ij}$ in Equation (2) when Equation (5) is expressed in the form of Equation (2). Specifically, the calculation device 300 outputs a list of the coefficients of the variables $\sigma_{ij}$ and the coefficients of the products of variables $\sigma_{ij}$ and $\sigma_{kl}$ for for i = 1, 2, ... ,N,j = i, i+1, i+2, ... , N, k = 1, 2, ..., N, and l = k, k+1, k+2, ... , N.

The output (allocation result) of the allocation device 100 and the output (coefficients of the Ising variable) of the calculation device 300 are input to the input/output device 400. In addition, the user specifies the strength of the coupling (chain strength) between the qubits corresponding to the edges connecting the nodes in the chain and inputs the strength value to the input/output device 400. As this value, a value is input such that all the qubits of the nodes in the chain are in the same state. The chain strength specified here is assumed to be the same for all chains.

The input/output device 400 uses the allocation result, the coefficients of the Ising variables, and the chain strength to determine the qubits to be used in the quantum annealing machine 200 and to calculate the strength of the coupling between the qubits. The strength of coupling between the qubits calculated here includes the strength of coupling corresponding to the edges in the chain. The strength of the coupling is all equal to the specified chain strength. Then, the input/output device 400 inputs the list of qubits to be used and the strength of the coupling between the qubits to the quantum annealing machine 200.

The quantum annealing machine 200 realizes the strength of the coupling between the qubits specified by the input in the qubit specified by the input. The quantum annealing machine 200 then performs quantum annealing and outputs a list indicating the final state of the qubit to the input/output device 400. The input/output device 400 converts the list indicating the state of the qubit into a list indicating the value of the Ising variable. The input/output device 400 outputs the list to an output device (for example, display, electronic file, etc.) not shown in the drawing.

The relationship between the Pegasus graph and the quantum annealing machine is as described above. Consequently, which qubits are coupled to which qubits of the quantum annealing machine 200 corresponds to the structure of the Pegasus graph. In other words, the qubits correspond to the nodes of the Pegasus graph, and the coupling between the qubits corresponds to the edges of the Pegasus graph. A qubit consists of two states, and the quantum annealing machine 200 can treat which state it is in as a binary variable. The quantum annealing machine 200 cann make this binary variable correspond to a variable in the Ising problem. The quantum annealing machine 200 can solve the Ising problem by making the Ising problem correspond to a Pegasus graph and making the value of the Ising variable allocated to a node on the Pegasus graph correspond to the state of a qubit. As mentioned above, it should be noted that the quantum annealing machine 200 allocates variables of the Ising problem to the nodes on the Pegasus graph appropriately when making the Ising problem correspond to the Pegasus graph.

Hereinafter, the allocation device 100 is described in detail. Fig. 14 is a block diagram showing an example of the configuration of the allocation device 100. The allocation device 100 has an input acceptance unit 101, an allocation unit 102, and an output unit 103, as shown in Fig. 14. The input acceptance unit 101 accepts inputs the number N of variables in the Ising problem, and $c_0$, $w_0$, $k_0$, and $z_0$ which are parameters for the allocation of the Ising variable $\sigma_{1,2}$. This input is performed, for example, through an input device such as a keyboard (not shown in the drawing). For example, the user inputs the number N of variables in the Ising problem to be solved and $c_0$, $w_0$, $k_0$, and $z_0$ to which the specific values are set.

The allocation unit 102 allocates the Ising variables of the Ising problem to the nodes on the Pegasus graph. In other words, the allocation unit 102 reflects the periodic structure in the cost function of the Ising problem to the periodic structure of the Pegasus graph to allocate each Ising variable to a node on the Pegasus graph.

The output unit 103 outputs information indicating the correspondence between a binary variable and a node based on the result of the allocation of the binary variable to the node by the allocation unit 102. For example, the output unit 103 outputs the information indicating the correspondence to an output device such as a display (not shown in the drawing). For example, the output unit 103 outputs a list indicating the correspondence between a binary variable and a node. For example, the output unit 103 outputs a list enumerating lists enumerating the nodes on the Pegasus graph to which the Ising variable $\sigma_{i,j}$ or the Ising variable $\tau_{i,j}$ is allocated, with i = 1, 2, ... , N and j = i+1, i+2, ... , N, i.e., outputs a list including lists. For example, when the allocation unit 102 allocates the Ising variable $\sigma_{1,2}$ to node 0 and node 1, the Ising variable $\sigma_{2,3}$ to node 2 and node 3, the Ising variable $\tau_{1,2}$ to node 4 and node 5, and the Ising variable $\tau_{2,3}$ to node 6 and node 7, the output unit 103 outputs information expressed as {$\sigma_{1,2}$ : [0, 1], $\sigma_{2,3}$ : [2, 3], $\tau_{1,2}$ : [4, 5], $\tau_{2,3}$ : [6, 7]}.

Fig. 15 is a block diagram showing an example of the hardware configuration of the allocation device 100. The allocation device 100 shown in Fig. 15 includes a network interface 150, a memory 151, and a processor 152. The network interface 150, memory 151, and processor 152 are interconnected through a data bus, etc..

The network interface 150 is used to communicate with any other device. The network interface 150 may include a network interface card (NiC) , for example.

The memory 151 comprises a combination of a volatile memory and a nonvolatile memory, for example. The memory 151 is used to store software (computer program) including one or more instructions which are executed by the processor 152 and data for various processes of the allocation device 100.

The processor 152 reads software (computer program) from the memory 151 and executes it to process each component shown in Fig. 14.

The processor 152 is a microprocessor, an MPU (micro processor unit), or a CPU (central processing unit), for example. The processor 152 may include multiple processors.

In this way, the allocation device 100 can be realized in a device (information processing device) that functions as a computer.

The program described above can be stored on one of various types of non-transitory computer readable media and supplied to a computer. The non-transitory computer readable media include various types of tangible storage media. Examples of non-transient computer readable a media include magnetic storage medium (for example, flexible disk, magnetic tape, hard disk), a magneto-optical storage medium (for example, magneto-optical disk), a CD-ROM (Read Only Memory), a CD-R, a CD-RW, a semiconductor memory (for example, mask ROM, PROM (Programmable ROM), EPROM (Erasable PROM), a flash ROM, a RAM (Random Access Memory)). Then program may also be supplied to a computer by various types of transitory computer readable media. The transitory computer readable medium is, for example, RAM (Random Access Memory). The program may be supplied to the computer through a wired communication path such as a wire and an optical fiber or a wireless communication path.

Hereinafter, the allocation by the allocation unit 102 is described.

As mentioned above, the allocation unit 102 specifies the position of the unit and the type of chain when allocating. Therefore, first, how to specify the nodes of the Pegasus graph is explained. Next, the method of specifying the position of the unit is explained. Next, the types of chain is explained.

As mentioned above, the coordinates of a node on the Pegasus graph are represented by $(u, w, k, z)$. The possible values are $u=0, 1$, $w=0, 1, ... , M-1$, $k=0, 1, ..., 11$, $z=0, 1, ... , M-2$, and $k=0, 1, ... , M-2$, respectively. M is a parameter that represents the size of the entire Pegasus graph. Here, M is assumed to be sufficiently large. It should be noted that when the allocation device 100 outputs the list of allocations of Ising variables to nodes, the coordinates of the nodes themselves are not used in the output. Instead, the number of the node, which is uniquely determined from the coordinates, is used. When the coordinates of a node are $(u, w, k, z)$ and the number of that node is x, x is given by Equation (6).

[Math. 6]

$$x = z + (M - 1)(k + 12(w + Mu)) \qquad \text{Equation (6)}$$

However, the process of converting from $(u, w, k, z)$ to x is not limited to the process illustrated in Equation (6). The conversion process can be any process in which two different coordinates $(u, w, k, z)$ are converted to different x.

In the following description, coordinates $(u, w, k, z)$ are used instead of x above.

Next, how the allocation unit 102 specifies the position of the unit is explained. Consider four nodes in the unit where $u = 0$. Suppose that the node with the smallest k (node 911a in Fig. 3) among these four nodes has coordinates $(0, w_0, k_0, z_0)$. This unit is referred to as unit $(w_0, k_0, z_0)$. $k_0$ can take the value 0, 4, or 8. The coordinates of the node with the smallest k (node 912a in Fig. 3) among the four nodes with $u = 1$ in the unit $(w_0, k_0, z_0)$ are determined for each value of $k_0$ as follows. When $k_0 = 0$, the coordinates of node 912a are $(1, z_0, 8, w_0 -1)$. When $k_0 = 4$, the coordinates of node 912a are $(1, z_0+1, 4, w_0)$. When $k_0 = 8$, the coordinates of node 912a are $(1, z_0+1, 0, w_0)$. The units that belong to the same unit sequence as the unit $(w_0, k_0, z_0)$ and are connected to the unit $(w_0, k_0, z_0)$ can be specified according to the value of $k_0$ as follows. When $k_0 = 0$, the connected units are the unit $(w_0, 8, z)$ and the unit $(w_0, 4, z-1)$. When $k_0 = 4$, the connected units are the unit $(w_0, 0, z+1)$ and the unit $(w_0, 8, z)$. When $k_0 = 8$, the connected units are the unit $(w_0, 4, z)$ and the unit $(w_0+1, 0, z)$. Of the two units for each $k_0$, the former is referred to as the lower left adjacent unit and the latter is referred to as the upper right adjacent unit. In particular, the change in coordinates when moving to the upper right adjacent unit is expressed by Equation (7) as follows.

$$(w, k, z) \rightarrow (w, 4, z-1) \qquad \text{(when k=0)}$$
$$(w, 8, z) \qquad \text{(when k = 4)} \qquad \text{Equation (7)}$$
$$(w+1, 0, z) \qquad \text{(when k=8)}$$

Next, the type of chain is explained. The type of chain is determined solely by the relative positions of the nodes in the two adjacent units. The type of chain does not depend on the positions of the two adjacent units in the Pegasus graph. Therefore, consider two units 972a and 972b that are adjacent in a unit sequence as shown in Fig. 12. The unit 972b is the upper right adjacent unit to the unit 972a. The position of unit 972a in the Pegasus graph is arbitrary. The four nodes with $u=0$ in the unit 972a are called nodes A00, A01, A02, A03 in decreasing order of k. The four nodes with $u=1$ of the unit 972a are called nodes A10, A11, A12, A13 in decreasing order of k. The four nodes with $u = 0$ in unit 972b are called nodes B00, B01, B02, B03 in order of decreasing k. The four nodes with $u = 1$ in unit 972b are called nodes B10, B11, B12, B13 in order of decreasing k. There are four types of chains. They are called chain types (hereinafter, also called chains) $\alpha$, $\beta$, $\gamma$, and $\delta$. They all consist of two nodes. The nodes used in each chain are composed of the above nodes as follows. The chain $\alpha$ consists of node the A12 and the node A02. The chain $\beta$ consists of the node A01 and the node A11. The chain $\gamma$ consists of the node A03 and the node B13. The chain $\delta$ consists of the node A10 and the node B00. In other words, in Fig. 12, the chain $\alpha$ is the chain 971a. The chain $\beta$ is the chain 971b. The chain $\gamma$ is the chain 971c. The chain $\delta$ is the chain 971d.

When allocating variables, the allocation unit 102 specifies the position $(w, k, z)$ in the Pegasus graph of unit 972a above and the type of chain. This identifies the node to be allocated. Therefore, the position of unit 972a and the type of chain are expressed as one to represent the chain for which the node has been identified. For example, when unit 972a is the unit $(w_0, k_0, z_0)$ and when the type of chain is chain $\alpha$, this chain is represented as $\alpha (w_0, k_0, z_0)$. When the type of chain is chain $\beta$, $\gamma$, or $\delta$, it is represented in the same way. The allocation of variables comes down to making each variable correspond to each of the above chains.

Hereinafter, the specific method allocating variables by which the allocation unit 102 allocates variables by specifying the position of the unit and the type of chain is explained.

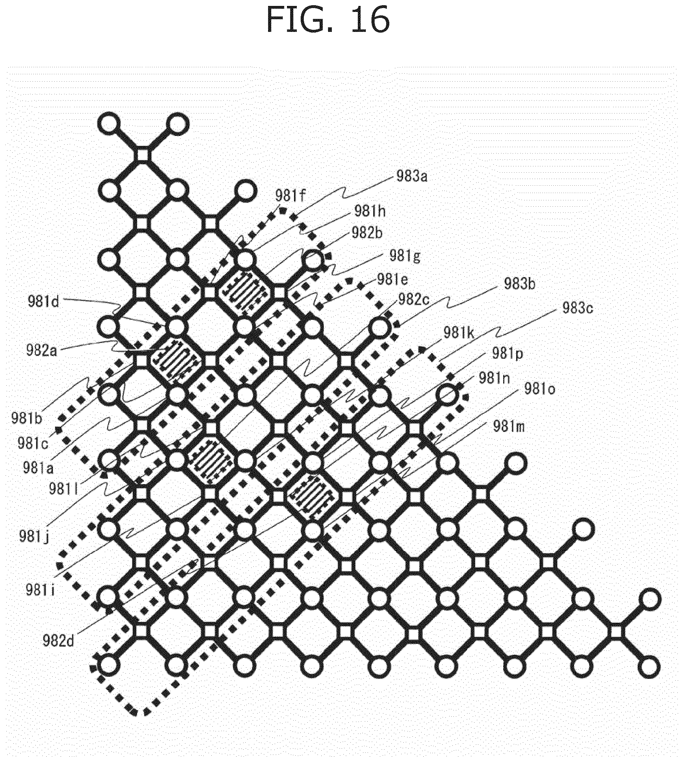

As described above, the allocation unit 102 makes allocations so that a plaquette sequence in the square grid structure of the Ising variable corresponds to a unit sequence. First, how allocation unit 102 makes one plaquette correspond to one unit is shown. Consider one plaquette consisting of Ising variables $\sigma_{i+1, j+1}$, $\tau_{i,j}$, $\tau_{i+1, j}$, and $\sigma_{i+1, j}$. In Fig. 16, let the Ising variables $\sigma_{i+1, j+1}$, $\tau_{i,j}$, $\tau_{i+1, j}$, and $\sigma_{i+1, j}$ be Ising variables 981a, 981b, 981c, and 981d, respectively. Let the plaquette be plaquette 982a. The allocation unit 102 allocates each Ising variable of the plaquette 982a to chain $\alpha$ ($w_0$, $k_0$, $z_0$), chain $\beta$ ($w_0$, $k_0$, $z_0$), chain $\gamma$ ($w_0$, $k_0$, $z_0$) and chain $\delta$ ($w_0$, $k_0$, $z_0$) respectively.

Next, how the allocation unit 102 makes a plaquette sequence correspond to a unit sequence is explained. Consider the plaquette 982b which is next to the adjacent plaquette to the plaquette 982a in the plaquette sequence 983a to which plaquette 982a belongs. The plaquette 982b consists of Ising variables $\sigma_{i+2, j}$, $\tau_{i+1, j-1}$, $\tau_{i+2, j-1}$, and $\sigma_{i+2, j-1}$. The allocation unit 102 allocates these four variables to chains $\alpha$, $\beta$, $\gamma$, and $\delta$ in the upper right unit adjacent to the unit ($w_0$, $k_0$, $z_0$), respectively. When moving to the upper right adjacent unit, the coordinates change as shown in Equation (7). The allocation unit 102 can repeat this process to allocate all Ising variables in the plaquette sequence 983a to a chain consisting of nodes in the same unit sequence. Therefore, deciding which unit to allocate one plaquette in a plaquette sequence determines the allocation of all plaquettes in the plaquette sequence. Therefore, the allocation unit 102 determines the allocation so that one group (i.e., a unit sequence) processes a processing group (i.e., a plaquette sequence), according to predetermined group information that multiple components (units) in the quantum annealing machine hardware are grouped (to a unit sequence) depending on the connection relationship among the components. The process can also be said to determine the allocation of processing groups (i.e., plaquette sequences) to be processed by a single group (unit sequence), respectively. According to this process, the allocation is performed in such a way that the number of nodes is less biased and the number of nodes used is reduced. This is because, for a plurality of processing groups having a periodic structure, each processing group is allocated to each group according to the periodic configuration of the hardware configuration of the quantum annealing machine.

When making a plaquette sequence correspond to a unit sequence, Ising variables are allocated to chain types according to the following rule. Ising variables $\sigma$ whose sum of two subscripts is equal are all allocated to the chain of the same type. Similarly, all Ising variables $\tau$ whose sum of two subscripts is equal are allocated to the chain of the same type. This rule holds because the first subscript of the Ising variable to be allocated increases by 1 and the second subscript decreases by 1 as one moves one unit to the upper right of the unit sequence in the Pegasus graph. In the case of the plaquette sequence 983a above, the Ising variable $\sigma$ whose sum of the two subscripts is $i+j+2$ is allocated to the chain $\alpha$. The Ising variable $\sigma$ whose sum of the two subscripts is $i+j+1$ is allocated to the chain $\delta$. The Ising variable $\tau$ whose sum of the two subscripts is $i+j$ is allocated to the chain $\beta$. The Ising variable $\tau$ whose sum of the two subscripts is $i+j+1$ is allocated to the chain $\gamma$.

Next, consider the adjacent plaquette sequences. In the example shown in Fig. 16, the adjacent plaquette sequence to the above plaquette sequence 983a is the plaquette sequence 983b. Ising variables in the plaquette sequence 983b are allocated to the adjacent unit sequence chain. The allocation unit 102 selects the units to be allocated so that the product of the Ising variables in the adjacent plaquette sequences is represented by the edges between the nodes. Consider a plaquette consisting of Ising variables $\sigma_{i+1, j+1}$, $\tau_{i,j}$, $\tau_{i+1, j}$, $\sigma_{i+1, j}$ and a plaquette consisting of Ising variables $\tau_{i+i, j+2}$, $\sigma_{i+1, j+2}$, $\sigma_{i+2, j+2}$, $\tau_{i+1, j+1}$.

In Fig. 16, those plaquettes are the plaquette 982a which consists of Ising variables 981a, 981b, 981c, 981d, and the plaquette 982c which consists of Ising variables 981i, 981j, 981k, 981l. Suppose that allocation unit 102 allocates Ising variables 981a, 981b, 981c, and 981d of the plaquette 982a to the chains $\alpha$, $\beta$, $\gamma$, and $\delta$ of the unis ($w_0$, $k_0$, $z_0$) in this order. The unit to which the plaquette 982c is allocated is determined as follows according to the value of $k_0$. That is, the allocation unit 102 allocates the plaquette 982c to the unit as follows. When $k_0 = 0$, the allocation unit 102 allocates the plaquette 982c to the unit ($w_0$, 4, $z_0$). When $k_0 = 4$, the allocation unit 102 allocates the plaquette 982c to the unit ($w_0$, 8, $z_0+1$). When $k_0 = 8$, the allocation unit 102 allocates plaquette 982c to the unit ($w_0+1$, 0, $z_0+1$). The relative positional relationship in the Pegasus graph of the units to which the two plaquettes are allocated are the same for all $k_0$ values. Each Ising variable 981i, 981j, 981k, 981l of the plaquette 982c is allocated to the chain $\alpha$, $\beta$, $\gamma$, $\delta$ of the unit in this order. Once the unit to which one plaquette sequence is allocated is determined in the above manner, all units to which adjacent plaquette sequences are allocated are uniquely determined. With this allocation, all products of Ising variables belonging to adjacent plaquettes are made correspond to edges of the Pegasus graph.

In the above allocation, in the plaquette sequence 983b to which the plaquette 982c belongs, the Ising variable $\sigma$ whose sum of the two subscripts is $i+j+3$ is allocated to the chain $\beta$. The Ising variable $\sigma$ whose sum of the two subscripts is $i+j+4$ is allocated to the chain $\gamma$. The Ising variable $\tau$ whose sum of the two subscripts is $i+j+3$ is allocated to the chain $\alpha$. The Ising variable $\tau$ whose sum of the two subscripts is $i+j+2$ is allocated to the chain $\delta$. In the plaquette 982a, the Ising the variable $\sigma$ is allocated to the chain $\alpha$ and the chain $\delta$, whereas in the plaquette 982c, the Ising variable $\sigma$ is allocated to the chain $\beta$ and the chain $\gamma$. In other words, when the Ising variable $\sigma$ in a plaquette sequence is allocated to the chain $\alpha$ and the chain $\delta$, the Ising variable $\sigma$ in the adjacent plaquette sequence is allocated to the chain $\beta$ and

the chain $\gamma$.

Putting the sum of the two subscripts of the Ising variable $\sigma$ in the above two plaquette sequences 983a and 983b and the type of chain together, the sum of the subscripts and the type of chain are i+j+1 and chain $\delta$, i+j+2 and chain $\alpha$, i+j+3 and chain $\beta$, and i+j+4 and chain $\gamma$. In the allocation here, a plaquette is allocated to the adjacent unit sequence for each increment by 2 of the sum of the two subscripts of the Ising variable $\sigma$. In addition, the correspondence between the sum of the subscripts and the type of chain is periodic with period 4 for the sum of the subscripts. That is, in the above example, for example, variables with sums of the subscripts i+j+5 and i+j+7 are allocated to the chain $\delta$ and the chain $\beta$ in the adjacent unit sequence, respectively. It should be noted that although there is periodicity, the type of chain is not uniquely determined by the sum of the subscripts alone. The allocation unit 102 can uniquely make the sum of the subscripts correspond to the type of chain by specifying the type of chain for any one Ising variable. For example, in the above case, the Ising variable $\sigma_{i+1,\,j+1}$ is allocated to the chain $\alpha$, the chain to which the other Ising variables are allocated is uniquely determined.

Similar periodicity is also found in $\tau$. In addition to periodicity, there is the following relationship. When i+j = m for the Ising variable $\sigma_{i,\,j}$, the Ising variable $\tau$ for which the sum of the two subscripts is m + 1 is allocated to the same type of chain to which the Ising variable $\sigma_{i,\,j}$ is allocated. For example, in the above allocation, the Ising variable $\sigma_{i+1,\,j+1}$ is allocated to the chain $\alpha$, and the Ising variable $\tau_{i+1,\,j+2}$ is also allocated to the chain $\alpha$. This is due to the fact that the type of chain to be allocated is swapped between the Ising variable $\sigma$ and the Ising variable $\tau$ each time changing to the adjacent plaquette sequence.

When the Ising variable $\sigma$ of the plaquette sequence is allocated to the chains $\alpha$ and $\delta$ of the same unit sequence, how the adjacent plaquette sequences are allocated was explained. When the Ising variable $\sigma$ of a plaquette sequence is allocated to the chains $\beta$ and $\gamma$ of the same unit sequence, how the adjacent plaquette sequences are allocated is explained below.

Suppose that a plaquette consisting of Ising variables $\tau_{i+1,\,j+2}$, $\sigma_{i+1,\,j+2}$, $\sigma_{i+2,\,j+2}$, $\tau_{i+1,\,j+1}$ is allocated to the chains $\alpha$, $\beta$, $\gamma$, $\delta$ of the unit $(w_0, k_0, z_0)$ in this order. This plaquette is the plaquette 982c which consists of the Ising variables 981i, 981j, 981k, 981l in the example shown in Fig. 16. The plaquette 982c is included in the plaquette sequence 983b. Consider a plaquette consisting of Ising variables $\sigma_{i+3,\,j+3}$, $\tau_{i+2,\,j+2}$, $\tau_{i+3,\,j+2}$, $\sigma_{i+3,\,j+2}$ included in an adjacent plaquette sequence. This plaquette is the plaquette 982d which consists of Ising variables 981m, 981n, 981o, 981p in the example shown in Fig. 16. The plaquette 982d is included in the 983c plaquette sequence. The allocation unit 102 allocates the plaquette 982d to a unit according to the value of $k_0$ as follows. When $k_0 = 0$, the allocation unit 102 allocates the plaquette 982d to the unit $(w_0, 8, z_0)$. When $k_0 = 4$, the allocation unit 102 allocates the plaquette 982d to the unit $(w_0+1, 0, z_0+1)$. When$_0 = 8$, the allocation unit 102 allocates the plaquette 982d to the unit $(w_0+1, 4, z_0)$. The allocation unit 102 then allocates the Ising variables $\sigma_{i+3,\,j+3}$, $\tau_{i+2,\,j+2}$, $\tau_{i+3,\,j+2}$, $\sigma_{i+3,\,j+2}$ to the chains $\alpha$, $\beta$, $\gamma$, $\delta$ of that unit in this order. The subscript values of the Ising variables $\sigma_{i+3,\,j+3}$, $\tau_{i+2,\,j+2}$, $\tau_{i+3,\,j+2}$, $\sigma_{i+3,\,j+2}$ of plaquette 982d are obtained by increasing the i and j of the Ising variables $\sigma_{i+1,\,j+1}$, $\tau_{i,j}$, $\tau_{i+1,\,j}$, $\sigma_{i+1,\,j}$ of the plaquette 982a considered first by 2, respectively.

The relative relationship between the subscripts of the Ising variables in the plaquette allocated to a unit and the combination with the chain can be understood based on the relationships as mentioned above. This relative relationship means that given an Ising variable and the chain to which it is allocated, the other Ising variables in the plaquette that are allocated to the same unit as the unit to which the Ising variable is allocated and the chain to which they are allocated are identified. There are two types of such relative relationships.

The first type is the relation for the Ising variables $\sigma_{i+1,\,j+1}$, $\tau_{i,\,j}$, $\tau_{i+1,\,j}$, $\sigma_{i+1,\,j}$ for the plaquette variables i982a. The types of chains are the chains $\alpha$, $\beta$, $\gamma$, $\delta$ in this order. If the subscript i of these Ising s increased by a positive integer m and j is decreased by m, those Ising variables are the values with the subscripts of the Ising variables allocated to the units moved to the upper right side by m in the same unit sequence. If both i and j are increased by 2 × m, they become those with the subscripts of the Ising variables of the plaquette in the adjacent plaquette sequence by 2 × m, and those Ising variables are allocated to the adjacent unit sequence by 2 × m.

The second type is the relation for the Ising variables $\tau_{i+1,\,j+2}$, $\sigma_{i+1,\,j+2}$, $\sigma_{i+2,\,j+2}$, $\tau_{i+1,\,j+1}$ for the plaquette 982c. The types of chains are the chains $\alpha$, $\beta$, $\gamma$, $\delta$ in this order. This plaquette belongs to the adjacent plaquette sequence to the first type of plaquette. This plaquette is allocated to the adjacent unit sequence to the unit sequence to which the first type of plaquette sequence is allocated. As with the first type of plaquette, if the subscript i of the Ising variable is increased by m and j is decreased by m, those Ising variables those Ising variables are the values with the subscripts of the Ising variables allocated to the units moved to the upper right side by m in the same unit sequence. If both i and j are increased by 2 × m, they become those with the subscripts of the Ising variables of the plaquette in the adjacent plaquette sequence by 2 × m, and those Ising variables are allocated to the adjacent unit sequence by 2 × m. These two types alone represent all the plaquettes allocated to a unit. For example, when the Ising variable $\sigma_{1,\,3}$ is allocated to the chain $\alpha$, this Ising variable belongs to the first type of plaquette. Then the Ising variables $\tau_{0,\,2}$, $\tau_{1,\,2}$, $\sigma_{1,\,2}$ in the same plaquette are allocated to the chains $\beta$, $\gamma$, $\delta$ in the same unit, respectively. When the Ising variable $\sigma_{1,\,3}$ is allocated to the chain $\beta$, this Ising variable belongs to the second type of plaquette. Then, the Ising variables $\tau_{1,\,3}$, $\sigma_{2,\,3}$, $\tau_{1,\,2}$ in the same plaquette are allocated to the chains $\alpha$, $\gamma$, $\delta$ in the same unit, respectively.

As described above, by specifying the unit to which one plaquette is allocated by the allocation unit 102, all unit to which all plaquettes are allocated are determined. In general, the first plaquette specified by the allocation unit 102 can be the plaquette from any plaquette sequence. It is arbitrary whether the Ising variable $\sigma$ in the first plaquette sequence to be specified is allocated to the chain $\alpha$ and the chain $\delta$ or to the chain $\beta$ and the chain $\gamma$. Therefore, once the allocation unit 102 determines the type and the position of the chain to which an Ising variable is allocated, the chains to which other variables in the plaquette to which that variable belongs are allocated are determined. The above allocation method determines all the plaquettes, i.e., the chains to which all variables are allocated.

In this example embodiment, the allocation unit 102 first specifies the chain to which the Ising variable $\sigma_{1,2}$ is allocated. Next, considering the adjacent plaquette chains in order, the allocation unit 102 specifies the chains to which the Ising variable $\sigma$ for j = 3, 4, ... , N. After that the allocation unit 102 allocates the other Ising variables. The allocation unit 102 uses the function c[i] when specifying the chain. The remainder of integer i divided by integer j is denoted as i%j. c[i] denotes the type of chain. i%4 is 0, the type of chain is the chain $\alpha$. When i%4 is 1, , the type of chain is the chain $\beta$. When i%4 is 2, the type of chain is the chain $\gamma$. When i%4 is 3, the type of chain is the chain $\gamma$. When i%4 is 3, the chain type is chain $\delta$.

The chain to which the Ising variable $\sigma_{1,2}$ is allocated is called $c[c_0]$ ($w_0$, $k_0$, $z_0$). $c_0$ can be one of 0, 1, 2 and 3. The type of chain to which the Ising variable $\sigma_{1,j}$ is allocated is the chain $c[c_0 + j-2]$. The unit to which the chain belongs is derived by the following rule. When the Ising variable $\sigma_{1,j}$ is allocated to the chain $c[c_0 + j-2]$ ($w_j$, $k_j$, $z_j$), the units to which the Ising variable $\sigma_{1,j+1}$ is allocated are ($w_{j+1}$, $k_{j+1}$, $z_{j+1}$). When ($c_0 + j-2$)%4 is 0 or 2, ($w_{j+1}$, $k_{j+1}$, $z_{j+1}$) is as in Equation (8).

[Math. 7]

$$when \ (c_0 + j - 2)\%4 = 0, 2, \qquad \left(w_{j+1}, k_{j+1}, z_{j+1}\right) =$$

$$\begin{cases} \left(w_j, 4, z_j\right) & (when \ k_j = 0) \\ \left(w_j, 8, z_j + 1\right) & (when \ k_j = 4) \\ (w_j + 1, 0, z_j + 1) & (when \ k_j = 8) \end{cases}$$

Equation (8)

When ($c_0 + j-2$)%4 is 3, ($w_{j+1}$ , $k_{j+1}$ , $z_{j+1}$) is as in Equation (9).
[Math. 8]

$$when \ (c_0 + j - 2)\%4 = 3, \qquad \left(w_{j+1}, k_{j+1}, z_{j+1}\right) = \begin{cases} \left(w_j - 1, 8, z_j\right) & (when \ k_j = 0) \\ \left(w_j, 0, z_j + 1\right) & (when \ k_j = 4) \\ \left(w_j, 4, z_j\right) & (when \ k_j = 8) \end{cases}$$

Equation (9)

When ($c_0 + j-2$)%4 is 1, ($w_{j+1}$ , $k_{j+1}$ , $z_{j+1}$) is as in Equation (10).
[Math. 9]
when

$$(c_0 + j - 2)\%4 = 1, \qquad \left(w_{j+1}, k_{j+1}, z_{j+1}\right) = (w_j, k_j, z_j)$$

Equation (10)

The Ising variable $\sigma_{1,j+1}$ is allocated to the chain $c[c_0 + j-1]$ ($w_{j+1}$, $k_{j+1}$, $z_{j+1}$) obtained according to the above rule. Based on this rule, the allocation unit 102 can sequentially allocate the Ising variables $\sigma_{1,j}$ of j = 2, 3, ... , N.

Next, the allocation unit 102 specifies the chain to which the Ising variables $\sigma_{i+m,j-m}$ (note i + m < j - m) are allocated. The type of chain is determined by the sum of the two subscripts. In this case, the sum of the subscripts is I + j, with any m. Therefore, the type of the chain is equal at any m. When m = 1 - i, that is, with respect to the Ising variable $\sigma_{1,i+j-1}$, the type of the chain is the chain $c[c_0 + i + j-3]$. The unit to which the Ising variable $\sigma_{1,i+j-1}$ is allocated is determined by the above rule. For the other m, the unit to which the Ising variable is allocated changes to the upper right adjacent unit in the unit sequence as m increases by 1. The change in coordinates when moving to the upper right adjacent unit is represented by Equation (7). To show this explicitly, when the units to which the Ising variables $\sigma_{i+m,\,j-m}$ are allocated are $(w_m, k_m, z_m)$, the units to which the Ising variables $\sigma_{i+m+1,\,j-m-1}$ are allocated $(w_{m+1}, k_{m+1}, z_{m+1})$ are expressed in Equation (11).

[Math. 10]

$$(w_{m+1}, k_{m+1}, z_{m+1}) = \begin{cases} (w_m, 4, z_m - 1) & (when\ k_m = 0) \\ (w_m, 8, z_m) & (when\ k_m = 4) \\ (w_m + 1, 0, z_m) & (when\ k_m = 8) \end{cases} \qquad \text{Equation (11)}$$

According to this rule, the allocation unit 102 can sequentially allocate the Ising variables $\sigma_{i+m,\,j-m}$.

Using the Ising variable $\sigma$ allocated as described above, the allocation unit 102 can also specify the chain to which the Ising variable $\tau$ is allocated. As mentioned above, there are only two combinations of the relative relationship between the subscripts of the Ising variables in a plaquette that is allocated to a single unit and the chain. Therefore, the chain to which the Ising variable $\tau$ is allocated is uniquely determined from the chain to which the Ising variable $\sigma$ belonging to the same plaquette is allocated. Specifically, using the subscripts i and j of the Ising variable $\sigma_{i,\,j}$ allocated to the chain $\alpha$, Ising variables $\tau_{i-1,\,j-1}$ are allocated to the chain $\beta$ in the same plaquette. The Ising variable $\tau_{i,\,j-1}$ is allocated to the chain $\gamma$ in the same plaquette. Using the subscripts i and j of the Ising variable $\sigma_{i,\,j}$ allocated to the chain $\beta$, the Ising variable $\tau_{i,j}$ is allocated to the chain $\alpha$ in the same plaquette. The Ising variable $\tau_{i,\,j-1}$ is allocated to the chain $\delta$. The allocation unit 102 performs such allocations for each plaquette allocated to a unit. By the above process, all Ising variables $\tau$ are allocated to the chain.

As described above, when the allocation unit 102 specifies the above $c_0, w_0, k_0, z_0$, all Ising variables are sequentially allocated to chains on the Pegasus graph.

[Description of operation]

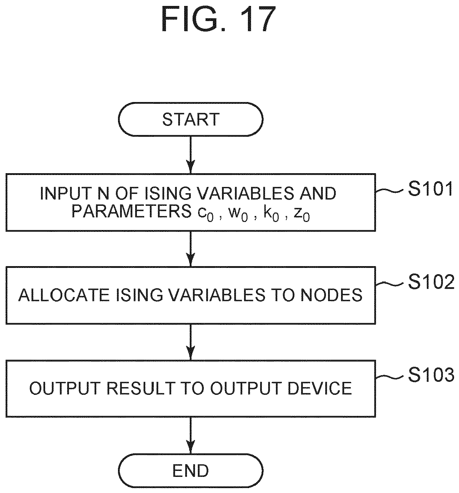

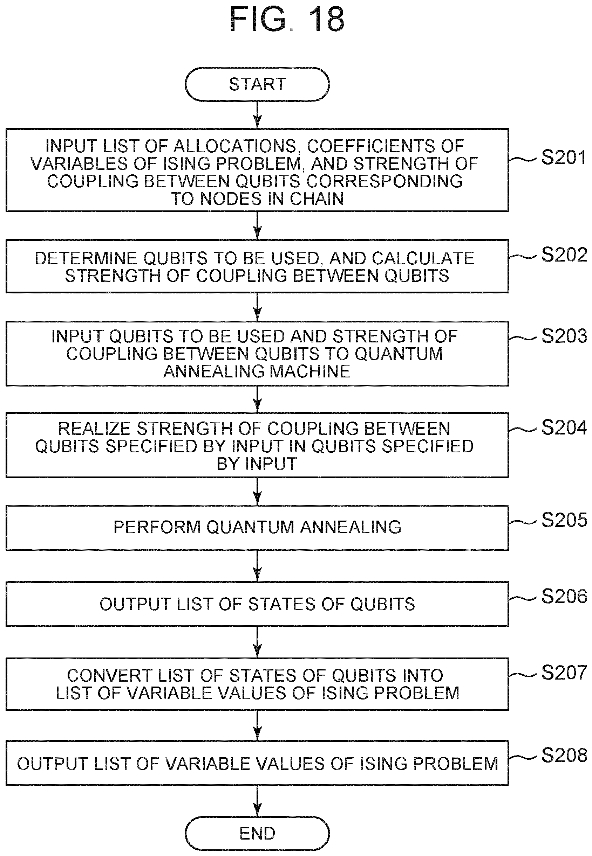

Next, the operation of this example embodiment is described with reference to the drawing. Fig. 17 is a flowchart showing an operation of the allocation device 100. Fig. 18 is a flowchart showing a calculation process of the Ising problem by the computing system 10.

Referring to Fig. 17, the flow of operation of the allocation device 100 is described.

First, the input acceptance unit 101 in the allocation device 100 accepts, through an input device not shown in the drawing, input of the number N of binary variables (Ising variables) in the Ising problem and the information $c_0, w_0, k_0, z_0$ about the node to which one Ising variable $\sigma_{0,\,1}$ is allocated (step S101).

Next, the allocation unit 102 in the allocation device 100 represents the input Ising problem for the number of Ising variables as an Ising problem in the form of Equation (5) which is stored in advance, and allocates the Ising variable $\sigma$ and the Ising variable $\tau$ to nodes on the Pegasus graph (step S102). At this point, only the information of which variables appear in the form of a product in Equation (5) is needed, and the specific values of the coefficients of the product in Equation (5) are not necessary. The allocation unit 102 performs the allocation as described above according to the values of N, $c_0$, $w_0$, $k_0$, and $z_0$.

Next, the output unit 103 in the allocation device 100 outputs information indicating the correspondence between binary variables and nodes based on the allocation result of the allocation unit 102 (step S103). This output may be to an output device such as a display (not shown in the drawing) or an output such as an electronic file.

Next, the flow of the operation of the computation of the Ising problem by the computing system 10 is described. When the Ising problem is solved by the quantum annealing machine 200, the flow of operations is as shown in the flowchart in Fig. 18.

First, the output of the allocation device 100 (list of allocations) and the output of the calculation device 300 (coefficients of Ising variables) are input to the input/output device 400 (step S201). Further, in step S201, the user specifies the strength of the coupling between the qubits corresponding to the edges connecting the nodes in the chain and inputs the strength value (chain strength) to the input/output device 400. The chain strength specified here is the same for all chains.

Next, the input/output device 400 determines the qubits to be used in the quantum annealing machine 200 using the list of allocations, the coefficients of the Ising variable, and the chain strength to, and calculates the strength of the coupling between the qubits (step S202). The quantum annealing machine 200 can easily perform calculations with the above three inputs. The strength of the coupling between the qubits calculated here includes the strength of the coupling corresponding to the edges in the chain. The strength of the coupling is all equal to the specified chain strength.

Next, the input/output device 400 inputs the list of qubits to be used and the strength of the coupling between the qubits to the quantum annealing machine 200 (step S203).

Next, the quantum annealing machine 200 realizes the strength of the coupling between the qubits specified by the input in the qubits specified by the input (step S204).

Next, the quantum annealing machine 200 performs quantum annealing (step S205). Specifically, the state of the qubits in the quantum annealing machine 200 transitions from the initial state to the state with the lowest overall qubit energy. Each qubit can generally take on two states, but will eventually be in one of the states.

A list of the states of each qubit at this time is then output from the quantum annealing machine 200 to the input/output device 400 (step S206).

Next, the input/output device 400 converts the list of qubit states into a list of Ising variable values (step S207). The result of the conversion is $\sigma_{1,2} = 0$, $\sigma_{1,3} = 2$, ... , for example.

The input/output device 400 outputs this list (step S208). This output may be to an output device such as a display (not shown in the drawing) or an output such as an electronic file, for example.

[Description of effect]

In this example embodiment, the allocation device 100 allocates the variables of the Ising problem represented by the cost function of the LHZ method to the nodes on the Pegasus graph. As mentioned above, according to the allocation of this example embodiment, a chain with a small number of nodes is constructed by devising the arrangement of the chain on the Pegasus graph. As a result, the overall number of used nodes can be reduced. In addition, the allocation device 100 can achieve the allocation without bias in the number of nodes in each chain. In this example embodiment, the number of nodes included in each chain is 2, independent of the number N of variables in the Ising problem.

For comparison, given the cost function in Equation (5), performing allocation based on the allocation method described in non-patent literature 1 is considered. Among the allocation methods based on the allocation method described in the non-patent literature, a method that does not bias the number of nodes in the chain is used. In this case, the maximum number of variables N that can be allocated is 19. In this allocation, for example, when N = 19, the number of nodes in each chain is 15.

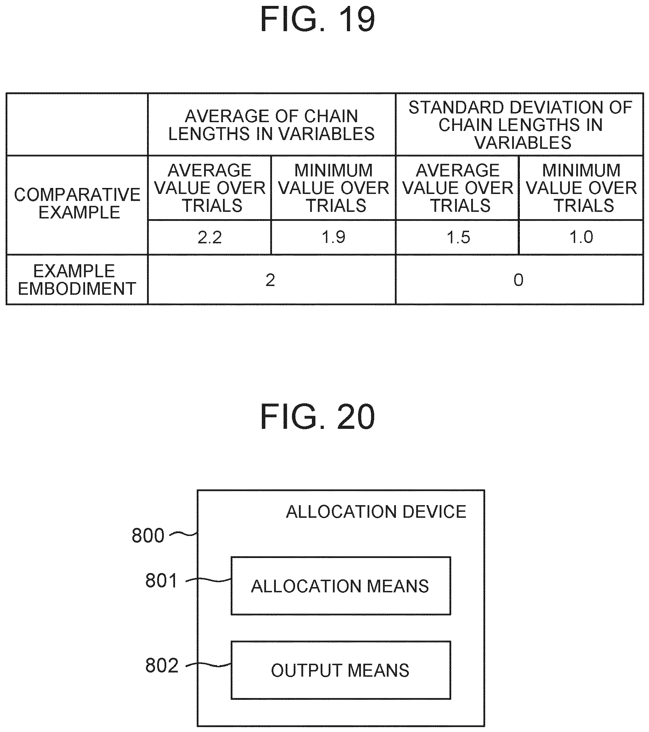

Similarly, given the cost function in Equation (5), consider performing allocation based on the allocation method described in non-patent literature 2. Fig. 19 shows a table in which the experimental results for the allocation based on the allocation method described in non-patent literature 2 are compared with the results of the allocation of this example embodiment. In this example, the number of variables N = 30. In the allocation based on the allocation method described in non-patent literature 2, the allocation is different for each trial. Therefore, 100 trials of the allocation based on the allocation method described in non-patent literature 2 were attempted. In each trial, the average and the standard deviation among chains (among variables) of the number of nodes in each chain were calculated. The average and the variance among chains were then calculated, and the average and the minimum value in the 100 trials were calculated. The calculation results are shown in the table in Fig. 19. The average value of the number of nodes in the chain over 100 trials is 2.2, and the minimum value is 1.9. In the allocation of this example embodiment, the number of nodes in the chain is 2. The number of nodes in the allocation of this example embodiment is smaller than the average value of the number of nodes in 100 trials of the allocation described in non-patent literature 2. In other words, the overall number of nodes used in the allocation of this example embodiment is smaller. However, the smallest average value of the number of nodes in the chain in the case of the allocation method described in non-patent literature 2 is 1.9. In other words, depending on the trial, the allocation based on the allocation method described in non-patent literature 2 will result in a smaller number of nodes in use than the allocation of this example embodiment. However, the average value of the standard deviation of the number of nodes in the chain of the allocation based on the allocation method described in non-patent literature 2 over 100 trials is 1.5, and the minimum value is 1.0. That is, in the allocation based on the allocation method described in non-patent literature 2, there is a bias in the number of nodes included in the chain in any trial. In the allocation of this example embodiment, since the number of nodes is 2 in all chains, there is no bias in the number of nodes. Therefore, the allocation of this example embodiment can achieve allocation without bias in the number of nodes included in the chain.

Next, an overview of the invention is explained. Fig. 20 is a block diagram showing the main part of the allocation device according to the invention. The allocation device 800 includes allocation means 801 (in the example embodiment, realized by the allocation unit 102) for allocating binary variables of an Ising problem, which represents a cost function of an LHZ method, to nodes on a Pegasus graph according to the number of the binary variables and parameters for determining allocation of the binary variables, and output means 802 (in the example embodiment, realized by the output unit 103) for outputting information indicating correspondence between the binary variable and the node, based on a result of the allocation of the binary variables to the nodes, wherein the allocation means 801 reflects a periodic structure that represents the relationship between pairs of the binary variables that are products in the cost function of the Ising problem to a periodic structure in the nodes and edges on the Pegasus graph, to allocate the binary variables to the nodes.

Although the invention of the present application has been described above with reference to example embodiments, the present invention is not limited to the above example embodiments. Various changes can be made to the configuration and details of the present invention that can be understood by those skilled in the art within the scope of the present invention.

**Reference Signs List**

> 100 Allocation device
> 101 Input acceptance unit
> 102 Allocation unit
> 103 Output unit
> 150 Network interface
> 151 Memory
> 152 Processor
> 200 Quantum annealing machine
> 300 Calculation device
> 400 Input/output device
> 800 Allocation device
> 801 Allocation means
> 802 Output means

**Claims**

1.  An allocation device comprising:

    allocation means for allocating binary variables of an Ising problem, which represents a cost function of an LHZ method, to nodes on a Pegasus graph according to the number of the binary variables and parameters for determining allocation of the binary variables, and
    output means for outputting information indicating correspondence between the binary variable and the node, based on a result of the allocation of the binary variables to the nodes,
    wherein
    the allocation means reflects a periodic structure that represents the relationship between pairs of the binary variables that are products in the cost function of the Ising problem to a periodic structure in the nodes and edges on the Pegasus graph, to allocate the binary variables to the nodes.

2.  The allocation device according to claim 1, further comprising
    input acceptance means for accepting input of the number of the binary variables and the parameters.

3.  The allocation device according to claim 1 or 2, wherein

    a tile consists of three units, which are unit graphs that make up the Pegasus graph, and
    the parameter consists of a value representing any direction in which the nodes align, a tile number for a direction in which the nodes align, a node number in the tile, and a tile number for a perpendicular direction to the direction in which the nodes align.

4.  The allocation device according to claim 3, wherein
    the cost function is expressed in Equation (A) below, the binary variables in the Ising problem are $\sigma$ and $\tau$ in the Equation (A), $J_{ij}$ in the Equation (A) is the i-by-j value of matrix J, where both i and j take 1, 2, ... , N-1, and C in the Equation (A) is a parameter to be adjusted in the range of positive values.
    [Math. 11]

$$H = -\sum_{i,j} J_{ij}\sigma_{ij}$$

$$-C\sum_{i,j}\left[-2\tau_{ij}\left(\sigma_{ij} + \sigma_{ij+1} + \sigma_{i+1,j} + \sigma_{i+1,j+1}\right) + \sigma_{i,j}\sigma_{i,j+1} + \sigma_{i,j}\sigma_{i+1,j}\right.$$

$$\left. + \sigma_{i,j}\sigma_{i+1,j+1} + \sigma_{i,j+1}\sigma_{i+1,j} + \sigma_{i,j+1}\sigma_{i+1,j+1} + \sigma_{i+1,j}\sigma_{i+1,j+1}\right]$$

Equation (A)

5. The allocation device according to claim 3 or 4,
   wherein

   the allocation means uses four types of chains $\alpha$, $\beta$, $\gamma$, $\delta$ consisting of two nodes as a set of nodes, when allocating the binary variables of the cost function of the Ising problem to the nodes, and determines the type of chain solely by relative positions of the nodes in the two adjacent first and second units on the Pegasus graph, and
   wherein, when
   the nodes, where the values representing any direction in which the nodes align in the first unit are 0, are regarded as A00, A01, A02, and A03 in order of decreasing number of the nodes in the tile,
   the nodes, where the values representing any direction in which the nodes align in the first unit are 1, are regarded as A10, A11, A12, and A13 in order of decreasing number of the nodes in the tile,
   the nodes, where the values representing any direction in which the nodes align in the second unit are 0, are regarded as B00, B01, B02, and B03 in order of decreasing number of the nodes in the tile, and
   the nodes, where the values representing any direction in which the nodes align in the second unit are 1, are regarded as B10, B11, B12, and B13 in order of decreasing number of the nodes in the tile,
   the chain $\alpha$ is composed of A12 and A02,
   the chain $\beta$ is composed of A01 and A11,
   the chain $\gamma$ is composed of A03 and B13, and
   the chain $\delta$ is composed of A10 and B00.

6. The allocation device according to claim 3 or 4,
   wherein

   coordinates of the units on the Pegasus graph are represented by three sets of parameters (w, k, z),
   when a remainder of integer i divided by integer j is denoted as i%j, the allocation means uses a function c[i] which indicate the chain $\alpha$ when i%4 is 0, the chain $\beta$ when i%4 is 1, the chain $\gamma$ when i%4 is 2, and the chain $\delta$ when i%4 is 3,
   the allocation means allocates the Ising variable $\sigma_{1,2}$ which is one of the binary variables to the chain which type is specified by the parameter $c_0$ and $c[c_0]$ in the unit specified by $(w_0, k_0, z_0)$, and regards the chain as a chain $c[c_0]$ $(w_0, k_0, z_0)$,
   the allocation means determines the type of chain to which the binary variable $\sigma_{i,2}$ is allocated where i = 1, 2, ... , N by $c[c_0 + 1]$, and regards the units to which the chain belongs as $(w_i, k_i, z_i)$,
   when the units to which the binary variables $\sigma_{1,j}$ is allocated are regarded as $(w_{j+1}, k_{j+1}, z_{j+1})$, the allocation means determines $(w_{j+1}, k_{j+1}, z_{j+1})$ by Equation (B) below when $(c_0 + j\text{-}2)\%4$ is 0 or 2, Equation (C) below when $(c_0 + j\text{-}2)\%4$ is 3, Equation (D) below when $(c_0 + j\text{-}2)\%4$ is 1,
   the allocation means sequentially allocates the Ising variables $\sigma_{1,j}$ of j = 2, ... , N-2 by above described rule,
   the type of chain, to which the Ising variable $\sigma_{i+m,j-m}$ (note i+m < j-m) of the binary variable is allocated, is regarded as the chain $c[c_0 + I + j\text{-}3]$, the unit, to which the Ising variable $\sigma_{1,i+j-1}$ is allocated, is determined by above described rule, for other m, the unit to which the Ising variable is allocated changes to the upper right adjacent unit in a unit sequence as m increases by 1, a change in coordinates when moving to the upper right adjacent unit is expressed by Equation (E) below,
   when the unit, to which the Ising variables $\sigma_{i+m,j-m}$ is allocated, is regarded as $(w_m, k_m, z_m)$, the allocation means determines the unit $(w_{m+1}, k_{m+1}, z_{m+1})$, to which the Ising variable $\sigma_{i+m+1,j-m-1}$ is allocated, $(w_m, k_m, z_m)$ by Equation (F) below,
   the allocation means sequentially allocates the Ising variables $\sigma_{i+m,j-m}$ by above described rule,

the allocation means, for subscripts i, j of the Ising variable $\sigma_{i,j}$ allocated to the chain $\alpha$, allocates the Ising variable $\tau_{i-1,j-1}$ to the chain $\beta$ in the unit including the node to which the Ising variable $\sigma_{i,j}$ is allocated, and the Ising variable $\tau_{i,j-1}$ to the chain $\gamma$ in the unit including the node to which the Ising variable $\sigma_{i,j}$ is allocated, and the allocation means, for subscripts i, j of the Ising variable $\sigma_{i,j}$ allocated to the chain $\beta$, allocates the Ising variable $\tau_{i,jj}$ to the chain $\alpha$ in the unit including the node to which the Ising variable $\sigma_{i,j}$ is allocated, and the Ising variable $\tau_{i,j-1}$ to the chain $\delta$ in the unit including the node to which the Ising variable $\sigma_{i,j}$ is allocated.

[Math. 12]

$$when \ (c_0 + j - 2)\%4 = 0, 2, \qquad \left(w_{j+1}, k_{j+1}, z_{j+1}\right) =$$

$$\begin{cases} \left(w_j, 4, z_j\right) & (when \ k_j = 0) \\ \left(w_j, 8, z_j + 1\right) & (when \ k_j = 4) \\ \left(w_j + 1, 0, z_j + 1\right) & (when \ k_j = 8) \end{cases}$$

$$\text{Equation (B)}$$

[Math. 13]

$$when$$

$$(c_0 + j - 2)\%4 = 3, \qquad \left(w_{j+1}, k_{j+1}, z_{j+1}\right) = \begin{cases} \left(w_j - 1, 8, z_j\right) & (when \ k_j = 0) \\ \left(w_j, 0, z_j + 1\right) & (when \ k_j = 4) \\ \left(w_j, 4, z_j\right) & (when \ k_j = 8) \end{cases}$$

$$\text{Equation (C)}$$

[Math. 14]

$$when \ (c_0 + j - 2)\%4 = 1, \qquad \left(w_{j+1}, k_{j+1}, z_{j+1}\right) = (w_j, k_j, z_j) \qquad \text{Equation}$$

(D)

$$(w, k, z) \to (w, 4, z\text{-}1) \qquad (when \ k=0)$$
$$(w, 8, z) \qquad (when \ k = 4) \qquad \text{Equation (E)}$$
$$(w+1, 0, z) \qquad (when \ k=8)$$

[Math. 15]

$$\left(w_{m+1}, k_{m+1}, z_{m+1}\right) = \begin{cases} \left(w_m, 4, z_m - 1\right) & (when \ k_m = 0) \\ \left(w_m, 8, z_m\right) & (when \ k_m = 4) \\ \left(w_m + 1, 0, z_m\right) & (when \ k_m = 8) \end{cases}$$

$$\text{Equation (F)}$$

**7.** An allocation device comprising:
allocation means for dividing multiple variables into a plurality of processing groups having a periodic structure according to a reference relationship in a processing procedure, based on information representing the processing procedure for calculating a cost function in an Ising problem, and according to predetermined group information that multiple components in quantum annealing machine hardware are divided into groups depending on a connection relationship among the components, determining allocation so that each of the processing groups is processed by one of the groups.

8. An allocation method comprising:

allocating binary variables of an Ising problem, which represents a cost function of an LHZ method, to nodes on a Pegasus graph according to the number of the binary variables and parameters for determining allocation of the binary variables,

outputting information indicating correspondence between the binary variable and the node, based on a result of the allocation of the binary variables to the nodes, and

reflecting a periodic structure that represents the relationship between pairs of the binary variables that are products in the cost function of the Ising problem to a periodic structure in the nodes and edges on the Pegasus graph, to allocate the binary variables to the nodes.

9. A computer-readable recording medium storing an allocation program, wherein
the allocation program causes a computer to execute:

a process of allocating binary variables of an Ising problem, which represents a cost function of an LHZ method, to nodes on a Pegasus graph according to the number of the binary variables and parameters for determining allocation of the binary variables, and

a process of outputting information indicating correspondence between the binary variable and the node, based on a result of the allocation of the binary variables to the nodes,

wherein

in the process of allocating, the allocation program causes a computer to execute reflecting a periodic structure that represents the relationship between pairs of the binary variables that are products in the cost function of the Ising problem to a periodic structure in the nodes and edges on the Pegasus graph, to allocate the binary variables to the nodes.

10. The recording medium according to claim 9, wherein
the allocation program causes a computer to execute a process of accepting input of the number of the binary variables and the parameters.

# FIG. 1

# FIG. 2

901

902

903

# FIG. 3

912a

912b

911a

911b

912d

912c

911c

911d

# FIG. 4

# FIG. 5

# FIG. 6

# FIG. 7

# FIG. 8

# FIG. 9

# FIG. 10

951a

951b

952a

951c

952b

951d

952c    951e

# FIG. 11

# FIG. 12

# FIG. 13

<u>10</u>

NUMBER N OF ISING
VARIABLES IN EQUATION (2)
PARAMETERS $c_0$ , $w_0$ , $k_0$ , $z_0$

$J_{ij}$ AND C IN EQUATION (2)

100 — | ALLOCATION DEVICE |

| CALCULATION DEVICE | — 300

LIST OF ALLOCATIONS OF
VARIABLES OF PROBLEM TO
NODES ON PEGASUS GRAPH

COEFFICIENTS OF
VARIABLES OF ISING
PROBLEM

LIST OF SOLUTIONS
OF ISING PROBLEM

| INPUT/OUTPUT DEVICE | — 400

LIST OF QUBITS TO BE USED AND
STRENGTH OF COUPLING
BETWEEN QUBITS

LIST OF FINAL STATES
OF QUBITS

| QUANTUM ANNEALING MACHINE | — 200

# FIG. 14

# FIG. 15

# FIG. 16

# FIG. 17

```
                    ( START )
                        |
                        v
   +-----------------------------------------+  ~S101
   |  INPUT N OF ISING VARIABLES AND         |
   |  PARAMETERS $c_0$ , $w_0$ , $k_0$ , $z_0$ |
   +-----------------------------------------+
                        |
                        v
   +-----------------------------------------+  ~S102
   |   ALLOCATE ISING VARIABLES TO NODES     |
   +-----------------------------------------+
                        |
                        v
   +-----------------------------------------+  ~S103
   |    OUTPUT RESULT TO OUTPUT DEVICE       |
   +-----------------------------------------+
                        |
                        v
                     ( END )
```

# FIG. 18

START

INPUT LIST OF ALLOCATIONS, COEFFICIENTS OF VARIABLES OF ISING PROBLEM, AND STRENGTH OF COUPLING BETWEEN QUBITS CORRESPONDING TO NODES IN CHAIN — S201

DETERMINE QUBITS TO BE USED, AND CALCULATE STRENGTH OF COUPLING BETWEEN QUBITS — S202

INPUT QUBITS TO BE USED AND STRENGTH OF COUPLING BETWEEN QUBITS TO QUANTUM ANNEALING MACHINE — S203

REALIZE STRENGTH OF COUPLING BETWEEN QUBITS SPECIFIED BY INPUT IN QUBITS SPECIFIED BY INPUT — S204

PERFORM QUANTUM ANNEALING — S205

OUTPUT LIST OF STATES OF QUBITS — S206

CONVERT LIST OF STATES OF QUBITS INTO LIST OF VARIABLE VALUES OF ISING PROBLEM — S207

OUTPUT LIST OF VARIABLE VALUES OF ISING PROBLEM — S208

END

# FIG. 19

| | AVERAGE OF CHAIN LENGTHS IN VARIABLES | | STANDARD DEVIATION OF CHAIN LENGTHS IN VARIABLES | |
|---|---|---|---|---|
| COMPARATIVE EXAMPLE | AVERAGE VALUE OVER TRIALS | MINIMUM VALUE OVER TRIALS | AVERAGE VALUE OVER TRIALS | MINIMUM VALUE OVER TRIALS |
| | 2.2 | 1.9 | 1.5 | 1.0 |
| EXAMPLE EMBODIMENT | 2 | | 0 | |

# FIG. 20

```
800 ─── ALLOCATION DEVICE

801 ─── ALLOCATION MEANS

802 ─── OUTPUT MEANS
```

## INTERNATIONAL SEARCH REPORT

| International application No. |
| --- |
| PCT/JP2021/017690 |

A. CLASSIFICATION OF SUBJECT MATTER
G06N 10/00(2019.01)i
FI: G06N10/00
According to International Patent Classification (IPC) or to both national classification and IPC

B. FIELDS SEARCHED

Minimum documentation searched (classification system followed by classification symbols)
C06N10/00

| Documentation searched other than minimum documentation to the extent that such documents are included in the fields searched | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | DATTANI, N. et al. Embedding quadratization gadgets on Chimera and Pegasus graphs [online]. arXiv. org., 23 January 2019, [retrieval date 06 July 2021], Internet: <URL: https://arxiv.org/pdf/1901.07676.pdf> in particular, table II, fig. 6, and descriptions therefor | 1-10 |
| A | ZBINDEN, S. et al. Embedding Algorithms for Quantum Annealers with Chimera and Pegasus Connection Topologies [online]. SpringerLink., 15 June 2020, [retrieval date 06 July 2021], Internet: <URL: https://link.springer.com/chapter/10.1007/978-3-030-50743-5_10> in particular, 3 Minor Embedding Heuristics | 1-10 |
| A | JP 2020-009301 A (HITACHI LTD) 16 January 2020 (2020-01-16) paragraphs [0027]-[0034], fig. 2A-B | 1-10 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 July 2021 (06.07.2021) | 13 July 2021 (13.07.2021) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

International application No.

PCT/JP2021/017690

| Patent Documents referred in the Report | Publication Date | Patent Family | Publication Date |
|---|---|---|---|
| JP 2020-009301 A | 16 Jan. 2020 | US 2020/0019885 A1 paragraphs [0025]-[0032], fig. 2A-B | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6656273 B

**Non-patent literature cited in the description**

- **K. BOOTHBY et al.** *Technical report", [online], D-wave Systems inc,* 23 March 2021, https://www.dwavesys.com/sites/default/files/14-1026A-C_Next-Generation-Topology-of-DW-Quantum-Processors.pdf
- **J. CAI et al.** A practical heuristic for finding graph minors. *arXiv,* 2014
- **A. ROCCHETTO et al.** Stabilizers as a design tool for new forms of the Lechner-Hauke-zoller annealer. *Science Advances,* 2016, vol. 2, e1601246